# EUROPÄISCHE PATENTSCHRIFT

(11) **EP 4 214 689 B1**
(45) Veröffentlichungstag und Bekanntmachung des Hinweises auf die Patenterteilung: **31.07.2024**
(21) Anmeldenummer: 21777990.9
(22) Anmeldetag: 14.09.2021
(51) Int. Cl.: G07D 7/0043, G07D 7/0047, G07D 7/12, G07D 7/2033

(54) **VERFAHREN ZUR FESTSTELLUNG EINER MANIPULATION ODER FÄLSCHUNG EINES GEGENSTANDS SOWIE SYSTEM HIERZU**
METHOD FOR DETERMINING A MANIPULATION OR FORGERY OF AN OBJECT AND SYSTEM THEREFOR
PROCÉDÉ DE DÉTECTION D'UNE MANIPULATION OU D'UNE CONTREFAÇON D'UN OBJET ET SYSTÈME CORRESPONDANT

(30) Priorität: 15.09.2020 DE 102020124060
(43) Veröffentlichungstag der Anmeldung: 26.07.2023
(73) Patentinhaber: Erich Utsch AG, 57080 Siegen (DE)
(72) Erfinder: PFUNDSTEIN, Bernd, 35630 Ehringhausen (DE); BONEV, Slavtcho, Metodiev, 68259 Mannheim (DE)
(74) Vertreter: Patentanwälte Bauer Vorberg Kayser
(86) Internationale Anmeldenummer: PCT/EP2021/075255
(87) Internationale Veröffentlichungsnummer: WO 2022/058319

(56) Entgegenhaltungen:
- EP-A2- 2 724 332
- EP-B1- 2 724 332
- US-A1- 2014 168 690

## Beschreibung

Gegenstand der vorliegenden Erfindung ist ein Verfahren zur Feststellung einer Manipulation oder Fälschung eines Gegenstands, der mit einer graphischen Repräsentation einer Information gekennzeichnet ist. Weiterhin ist Gegenstand der vorliegenden Erfindung ein System zur Feststellung einer Manipulation eines Gegenstands, der mit einer graphischen Repräsentation einer Information gekennzeichnet ist. Die graphische Repräsentation der Information kann insbesondere die Form eines 1d-codes wie einem Barcode oder eines 2d-codes wie einem QR-Code oder einem als Datamatrix-Code haben. Die Information kann aber auch in Klarschrift vorliegen. Des Weiteren ist ein Verfahren zur Detektion einer unautorisiert angefertigten Kopie eines solchen Gegenstands offenbart.

Aus dem Stand der Technik sind vielfältige Verfahren bekannt, um die Echtheit eines Dokuments, welches mit einer graphischen Repräsentation einer Information versehen ist, zu verifizieren. Neuere Verfahren machen sich insbesondere zunutze, dass die Oberfläche eine solchen Dokuments in einem Prüfbereich beispielsweise herstellungsseitig bereits irreguläre Strukturen trägt, die charakteristisch für des spezifische Dokument sind und nicht oder nur mit sehr hohem technischem Aufwand auf einem anderen Dokument repliziert werden können. In einem alternativen Ansatz wird die Oberfläche im Rahmen eines gattungsgemäßen Verfahrens in einem Prüfbereich mit einer artifiziellen irregulären Struktur versehen, z.B. indem die Oberfläche im Prüfbereich mit einem zufälligen Muster von Farbspritzern versehen wird. Für die Überprüfung der Echtheit eines solchen Dokuments wird in einem Registrierungsschritt eine unverarbeitete oder verarbeitete Referenzaufnahme des Prüfbereichs des Dokuments in einer Datenbank abgelegt. Um in einem nachgelagerten Validierungsschritt die Echtheit des Dokuments zu überprüfen, wird eine weitere Aufnahme des Prüfbereichs des Dokuments erzeugt und mit der in der Datenbank abgelegten Referenzaufnahme verglichen. Diese Technik ist auch unter dem Schlagwort "physical unclonable function" (kurz: PUF) bekannt.

Aus der DE 103 04 805 A1 ist beispielsweise ein Verfahren zur Herstellung von Sicherheitskennzeichen bekannt, wobei diese Sicherheitskennzeichen ein Zufallsmuster enthalten. Dieses Zufallsmuster kann eingelesen werden und ein entsprechender "Fingerabdruck" erstellt werden, der dann bei der Authentifizierung mit dem aufgenommenen Muster verglichen wird. Als Beispiel ist u.a. die Zufallsverteilung von Partikeln genannt. Zudem kann zusammen mit dem "Fingerabdruck" eine eindeutige Identifikationsnummer verwendet werden. Der extrahierte Fingerabdruck kann darüber hinaus auch selbst wieder in einer geeigneten graphischen Repräsentation auf dem zu kennzeichnenden Objekt gespeichert werden.

Eine Überlagerung eines Datamatrix Code oder anderer Referenzstrukturen mit einem solchen "Fingerabdruck" schlägt die WO 2019/197628 A1 vor. Aus dieser ist allgemein ein Verfahren für eine optische Produktauthentifizierung beschrieben. Das Produkt kann hier mit einer Folie beschichtet sein, welche zufällig verteilte, reflektierende und/oder lumineszierende Partikel enthält. Diese Partikelverteilung wird aufgezeichnet und als Referenzbild gespeichert. Anschließend kann ein Erkennungsbild mit dem vorher gespeicherten Referenzbild verglichen werden. Weiterhin ist eine Überlagerung der Partikel mit einem QR-Code offenbart, wobei der QR-Code dazu dienen soll, eine digitale Bildregistrierung zwischen dem Erkennungsbild und dem Referenzbild zu ermöglichen.

Eine solche Überlagerung ist weiterhin aus den ebenfalls gattungsbildenden Offenlegungsschriften US 2017/0132465 A1 und DE 10 2015 219 400 A1 bekannt.

Ferner offenbaren die US 2014/0168690 A1 und die EP 2 724 332 B1 Verfahren zur Prüfung von Dokumenten, wobei die Oberflächenbeschaffenheit (Mikrostruktur) des Gegenstands im Bereich einer beispielweise aufgedruckten Information (z.B. einer Seriennummer) analysiert und zur Erzeugung eines Referenzidentifiers verwendet wird. Dieser wird dann zusammen mit der Information gespeichert und zu einem späteren Zeitpunkt zur Prüfung verwendet.

Nachteilig an den aus dem Stand der Technik bekannten Verfahren ist, dass sie zwar eine Verifikation der Echtheit des die Information tragenden Gegenstands erlauben, nicht jedoch eine Verifikation der Echtheit der Information selbst. Hier setzt nun die vorliegende Erfindung ein. Sie hat sich zur Aufgabe gemacht, ein Verfahren zur Feststellung einer Manipulation eines Gegenstands, der mit einer graphischen Repräsentation einer Information gekennzeichnet ist, bereitzustellen. Weiterhin ist Aufgabe der vorliegenden Erfindung, ein System zur Feststellung einer Manipulation eines Gegenstands, der mit einer graphischen Repräsentation einer Information gekennzeichnet ist bereitzustellen. In beiden Fällen kann die Manipulation sowohl den Gegenstand selbst als auch die grafische Repräsentation der Information betreffen.

Gelöst wird diese Aufgabe durch ein Verfahren mit den Merkmalen des Anspruchs 1 sowie durch ein System mit den Merkmalen des Anspruchs 9.

Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Der in der vorliegenden Anmeldung verwendete Begriff "etwa" gibt einen Toleranzbereich an, den der auf dem vorliegenden Gebiet tätige Fachmann als üblich ansieht. Insbesondere ist unter dem Begriff "etwa" ein Toleranzbereich der bezogenen Größe von bis maximal +/-20 %, bevorzugt bis maximal +/-10 % zu verstehen.

Das erfindungsgemäße Verfahren ist zur fälschungssicheren Kennzeichnung eines Gegenstands mit einer graphischen Repräsentation einer Information vorgesehen, wobei es sich bei der Information beispielsweise um eine Seriennummer des mit der Information gekennzeichneten Gegenstands handeln kann. Unter einer Seriennummer soll im Rahmen der vorliegenden Erfindung eine beliebige Kennung verstanden werden, die den gekennzeichneten Gegenstand eindeutig identifiziert. Die Information kann aber auch die Identität des Herstellers oder Inverkehrbringers des Gegenstands betreffen oder des Inhabers bzw. Besitzers des Gegenstands. Grundsätzlich ist im Rahmen der vorliegenden Erfindung der Gegenstand der Information nicht beschränkt.

Unter einer zur Feststellung einer Manipulation eines Gegenstands, der mit einer graphischen Repräsentation einer Information gekennzeichnet ist, soll im Rahmen der vorliegenden Erfindung zu verstehen sein, dass eine Überprüfung dahingehend möglich ist, ob
- die graphische Repräsentation der Information auf dem Gegenstand verändert wurde, oder
- es sich um einen geänderten Gegenstand handelt, der mit der identischen Kennzeichnung versehen wurde, oder
- es sich um einen geänderten Gegenstand handelt, auf dem weiterhin die graphische Repräsentation der Information verändert wurde.

Besonders bevorzugt handelt es sich bei dem mit einer fälschungssicheren Kennzeichnung versehenen Gegenstand um ein amtliches Dokument, z.B. einen Führerschein, eine amtliche Bescheinigung oder ein Ausweisdokument wie einen Personalausweis oder einen Reisepass, um ein Zahlungsmittel wie einen Geldschein, eine Kreditkarte oder einen Scheck, um ein Wertpapier, um ein amtliches Zulassungsdokument wie einen Fahrzeugbrief oder einen amtlichen Gültigkeitsnachweis wie z.B. Zulassungspapiere oder eine Vignette für die Straßenbenutzung, oder um ein Kfz-Kennzeichenschild. Bei einem Kfz-Kennzeichenschild kann es sich neben einem am Äußeren eines Fahrzeugs anzubringenden Kennzeichenschild mit Legende sowie ggf. amtlichem Siegel auch um ein sogenanntes 3. Kennzeichen handeln, welches zur Anordnung im Innenraum eines Kraftfahrzeugs vorgesehen ist.

Wesentlich für die Erfindung ist, dass der Gegenstand eine Oberfläche mit einer kontrastgebenden, irregulären Mikrostruktur aufweist. Dabei ist unter einer kontrastgebenden Mikrostruktur eine Struktur zu verstehen, die mittels optischer Mittel detektiert werden kann. Insbesondere soll eine solche Mikrostruktur anhand einer optischen Abbildung des betreffenden Oberflächenbereichs, z.B. mittels einer photographischen Aufnahme, erkennbar sein. Die Strukturgröße einer solchen Mikrostruktur soll dabei bevorzugt kleiner sein als die charakteristischen Abmessungen der graphischen Darstellung der Information.

Die kontrastgebende Mikrostruktur kann dabei bereits bei der Herstellung des Gegenstands erzeugt worden sein, insbesondere kann sie in inhärentes Produktmerkmal des Gegenstands sein.

In diesem Fall werden die charakteristischen Abmessungen der graphischen Darstellung der Information vorteilhaft angepasst an die Strukturgröße der Mikrostruktur gewählt.

Erfindungsgemäß ist der Gegenstand eine retroreflektierende Folie, die auf kugelförmigen transparenten Beads basiert, die in eine transparente Matrix eingebettet sind. Insbesondere kann es sich bei einem solchen Gegenstand um ein retroreflektierendes Kfz-Kennzeichenschild handeln, welches insbesondere mit einer individuellen Legende versehen sein kann.

In nicht erfindungsgemäßen Beispielen kann die Mikrostruktur auch in vorgelagerten Verfahrensschritten auf oder in dem Gegenstand erzeugt worden sein, z.B. mittels eines geeigneten Druckverfahrens, z.B. mittels des aus der DE 103 04 805 A1 bekannten Druckverfahrens. In diesem Fall wird die Strukturgröße der erzeugten Mikrostruktur vorteilhaft an die gewünschten charakteristischen Abmessungen der graphischen Darstellung der Information angepasst gewählt.

Die Erfindung geht davon aus, dass eine grafische Repräsentation der Information vorliegt, insbesondere in Klarschrift oder in Form eines 1d-codes wie eines Barcodes bzw. eines 2d-codes wie eines QR-Codes oder eines Datamatrix-Codes. Eine vorteilhafte Weiterbildung des erfindungsgemäßen Verfahrens umfasst weiterhin den Verfahrensschritt des Generierens einer graphischen Repräsentation der Information.

Weiterhin geht die Erfindung davon aus, dass der Gegenstand mit der grafischen Repräsentation der Informationen gekennzeichnet ist, wobei Bereiche ausgebildet werden, die einen maschinell detektierbaren Kontrast zu den umgebenden Oberflächenbereichen des Gegenstands aufweisen.

Insbesondere kann die vorgenannte kontrastgebende Mikrostruktur der Oberfläche des Gegenstands auch dadurch erzeugt werden, dass der Gegenstand eine Mikrostruktur in seinem Inneren aufweist, die bei der Anbringung der grafischen Repräsentation der Information am Gegenstand zur Ausbildung einer kontrastgebenden Mikrostruktur an der Oberfläche des Gegenstands führt, welche dann sichtbar, d.h. mittels Bildverarbeitung detektierbar, wird. Dies kann insbesondere dann der Fall sein, wenn die grafische Repräsentation der Information mittels Lasermarkierung des Gegenstands erzeugt wird.

Eine weitere vorteilhafte Weiterbildung des erfindungsgemäßen Verfahrens umfasst daher weiterhin den Verfahrensschritt des Kennzeichnens des Gegenstands mit der grafischen Repräsentation der Information.

Bei der Kennzeichnung des Gegenstands mit der graphischen Repräsentation der Information werden am Gegenstand durch geeignete Behandlung wie Laserbestrahlung oder Bedrucken Bereiche ausgebildet, die an der Oberfläche des Gegenstands vor dem Hintergrund der unbehandelten Oberfläche des Gegenstands optisch detektierbar sind. Diese Bereiche weisen einen maschinell detektierbaren Kontrast zu den umgebenden Oberflächenbereichen des Gegenstands auf. Insbesondere kann es sich bei einem Bereich, der einen maschinell detektierbaren Kontrast zu den umgebenden Oberflächenbereichen des Gegenstands aufweist, um einen Oberflächenbereich handeln, dessen Helligkeitswert oder Farbwert sich von demjenigen der umgebenden Oberflächenbereiche des Gegenstands messbar unterscheidet.

Zur sprachlichen Vereinfachung wird dies im Kontext der vorliegenden Erfindung als Ausbildung heller und dunkler Bereiche bezeichnet, da sich zumindest die Helligkeitswerte oder die Farbwerte dieser Bereiche voneinander messbar voneinander unterscheiden.

Insbesondere können die hellen Bereiche vom unbehandelten Untergrund des mit der graphischen Repräsentation der Information versehenen Bereichs des Gegenstands ausgebildet werden.

Insbesondere können die dunklen Bereiche durch die behandelten Oberflächenbereiche ausgebildet werden. Insbesondere können sie schwarz erscheinen.

Es wird darauf hingewiesen, dass insbesondere bei 1d- sowie 2d-codes in der Regel sowohl die hellen als auch die dunklen Bereiche des jeweiligen Codes die enthaltene Information codieren.

Das erfindungsgemäße Verfahren nach Anspruch 1 weist nun in einem ersten Verfahrensabschnitt, der im Folgenden als Produktregistrierung bezeichnet wird, die folgenden Verfahrensschritte auf:
a. Erstellen einer ersten Aufnahme des Oberflächenbereichs des Gegenstands, in dem die graphische Repräsentation der Information angeordnet ist,
b. Ortsaufgelöstes Analysieren der ersten Aufnahme in den hellen oder/und in den dunklen Bereichen, um einen Referenzidentifier zu generieren,
c. Bereitstellen des Referenzidentifiers in einer Datenstruktur.

Diese Verfahrensschritte werden in der Regel nur einmal ausgeführt, typisch in engem zeitlichem Zusammenhang mit der Anbringung der grafischen Repräsentation der Information am Gegenstand.

Die nachfolgenden Verfahrensschritte, die der Produktvalidierung dienen, werden zeitlich nachgelagert ausgeführt, um einen Gegenstand, der mit dem in den ersten Schritten mit der graphischen Darstellung der Information gekennzeichneten Gegenstand zumindest nach dem ersten Anschein identisch ist, dahingehend zu überprüfen, um es sich tatsächlich um den im Rahmen der Produktregistrierung gekennzeichneten Gegenstand handelt bzw. ob der Gegenstand mit der Information gekennzeichnet ist, die bei der Produktregistrierung auf den registrierten Gegenstand aufgebracht wurde. Das Verfahren liefert nur dann ein positives Prüfergebnis, wenn es sich bei dem validierten Gegenstand tatsächlich um den registrierten Gegenstand handelt und wenn die Produktvalidierung ergibt, dass die Information, mit der der validierte Gegenstand gekennzeichnet ist, mit der im Registrierungsschritt auf dem registrierten Gegenstand angeordneten Information identisch ist.

Hierzu weist das erfindungsgemäße Verfahren in einem zweiten Verfahrensabschnitt, die im Folgenden als Produktvalidierung bezeichnet wird, die folgenden weiteren Verfahrensschritte auf:
d. Erstellen einer Prüfaufnahme des Oberflächenbereichs eines zu validierenden Gegenstands, in dem die graphische Repräsentation einer Information angeordnet ist,
e. Ortsaufgelöstes Analysieren der Prüfaufnahme des Oberflächenbereichs in den hellen oder/und in den dunklen Bereichen, um einen Prüfidentifier zu generieren,
f. Abrufen eines Referenzidentifiers aus der Datenstruktur,
g. Ausführen eines Verfahrens zur Bestimmung des Übereinstimmungsgrads zwischen dem Prüfidentifier und dem aus der Datenstruktur abgerufenen Referenzidentifier, und
h. Kategorisieren der Information oder/und des Gegenstands als
   A. "nicht manipuliert", wenn zumindest ein voreingestellter Mindestübereinstimmungsgrad erreicht wird, oder
   B. "manipuliert", wenn ein voreingestellter Mindestübereinstimmungsgrad nicht erreicht wird.

Es wird darauf hingewiesen, dass im Rahmen des erfindungsgemäßen Verfahrens nicht zwangsläufig eine Extraktion der Informationen aus der Prüfaufnahme erfolgen muss. Dennoch erlaubt das Verfahren, die auf dem Gegenstand angebrachte Informationen als manipuliert/nicht manipuliert zu kategorisieren.

In einer ersten vorteilhaften Ausgestaltung des erfindungsgemäßen Verfahrens wird der Referenzidentifier bei der Produktregistrierung zusammen mit der Information in der Datenstruktur abgelegt. Im nachgelagerten Validierungsschritt wird in Schritt f. der der Validierung zugrunde zu legende Referenzidentifier anhand der Information aus der Datenstruktur abgerufen.

Diese Verfahrensweise erlaubt es, ressourcensparend gezielt einen in der Datenstruktur abgelegten Identifier abzurufen, der dem zu validierenden Gegenstand zugeordnet ist. Insbesondere muss in dieser Ausgestaltung das Verfahren zur Bestimmung des Übereinstimmungsgrads zwischen dem Prüfidentifier und dem aus der Datenstruktur abgerufenen Referenzidentifier nur ein einziges Mal ausgeführt werden.

In einer zweiten Ausgestaltung des erfindungsgemäßen Verfahrens wird bei der Produktregistrierung die Information nicht zusammen mit dem Referenzidentifier in der Datenstruktur abgelegt. Ohne weitere Maßnahmen steht damit keine Möglichkeit zur Verfügung, gezielt einen Referenzidentifier aus der Datenbank abzurufen, der für die Validierung herangezogen werden soll. In dieser Ausgestaltung des Verfahrens wird das Verfahren zur Bestimmung des Übereinstimmungsgrads zwischen dem Prüfidentifier und dem aus der Datenstruktur abgerufenen Referenzidentifier daher in der Regel wiederholt ausgeführt, und zwar so oft, bis entweder in Verfahrensschritt h. eine extrahierte Information das Ergebnis "nicht manipuliert" liefert, oder bis alle in der Datenstruktur abgelegten Referenzidentifier als "manipuliert" kategorisiert wurden.

Im ersten Fall handelt es sich bei dem überprüften Gegenstand um den bei der Produktregistrierung registrierten Gegenstand und bei der extrahierten Information um die Information, die bei der Produktregistrierung auf dem registrierten Gegenstand angeordnet war. Es liegt daher keine Manipulation oder Fälschung vor.

Im zweiten Fall handelt es sich bei dem überprüften Gegenstand entweder nicht um den bei der Produktregistrierung registrierten Gegenstand oder/und es handelt sich bei der extrahierten Information nicht um die Information, die bei der Produktregistrierung auf dem registrierten Gegenstand angeordnet war. Es liegt daher eine Manipulation oder Fälschung vor.

In einer bevorzugten Ausgestaltung der vorliegenden Erfindung befindet sich die Datenstruktur auf dem Gegenstand selbst. Im einfachsten Fall ist die Datenstruktur unmittelbar als graphische Codierung des Referenzidentifiers ausgebildet, die auf geeignete Weise auf dem Gegenstand angeordnet wird. Als geeignete graphische Codierungen haben sich beispielsweise 1d-codes wie Barcodes oder 2d-codes wie QR-Codes oder Datamatrix-Codes erwiesen.

In einer alternativen Ausgestaltung wird als graphische Codierung des Referenzidentifiers Klarschrift verwendet.

Bevorzugt erfolgt die Anordnung der graphischen Codierung am Gegenstand dergestalt, dass eine Manipulation der graphischen Codierung erschwert ist. Dies kann erreicht werden, indem die Kennzeichnung mittels einer lokalen irreversiblen Veränderung des Materials des Gegenstands am Gegenstand angebracht wird, z.B. mittels Laserbeschriftung. Eine solche Laserbeschriftung kann insbesondere auch in das Material des Gegenstands eingebracht sein und ist nicht auf eine rein oberflächliche Veränderung des Materials des Gegenstands beschränkt.

Dies ist insbesondere dann von Vorteil, wenn der Gegenstand zumindest teiltransparent ausgebildet ist, z.B. indem er an der Oberfläche eine transparente Schicht aufweist, die beispielsweise als (teil)transparente Folie ausgebildet sein kann.

Möglich ist aber auch eine die Anordnung der graphischen Codierung am Gegenstand mittels geeigneter Druck-, Präge-, Gravier- oder Stanzverfahren.

In einer alternativen, bevorzugten Ausgestaltung ist die Datenstruktur als Speicherchip ausgebildet, der fest mit dem Gegenstand verbunden ist. Insbesondere kann es sich hierbei um einen Speicherchip handeln, dessen Speicherinhalt mittels drahtloser Kommunikation auslesbar ist, beispielsweise um einen RFID-Chip oder einen NFC-Chip. Der Referenzidentifier wird in digitaler Form im Speicherchip abgelegt und kann mittels geeigneter Lesegeräte aus diesem abgerufen werden.

### In einer bevorzugten Weiterbildung wird der Referenzidentifier verschlüsselt im Speicherchip abgelegt

In einer weiteren bevorzugten Weiterbildung ist der Speicherchip für eine verschlüsselte drahtlose Kommunikation mit einem geeigneten Lesegerät eingerichtet.

In einer alternativen bevorzugten Ausgestaltung der vorliegenden Erfindung ist die Datenstruktur separat von dem Gegenstand ausgebildet.

In einer ersten Ausgestaltung ist die Datenstruktur analog zu der vorstehenden Ausgestaltung ausgebildet, d.h. als graphische Codierung oder als in digitaler Form in einem geeigneten Speichermedium abgelegter Referenzidentifier. Abweichend von der ersten Ausgestaltung ist die Datenstruktur jedoch nicht am Gegenstand selbst ausgebildet, sondern auf einem separat ausgebildeten Gegenstand. Bevorzugt sind der Gegenstand und der weitere, separat ausgebildete Gegenstand im bestimmungsgemäßen Gebrauch getrennt voneinander angeordnet. Als Beispiel hierfür sei ein weltweit gebräuchliches Kfz-Kennzeichenschild mit Kennzeichenlegende zur Anbringung am Äußeren eines Kraftfahrzeugs als Gegenstand genannt und als weiterer, separat ausgebildeter Gegenstand ein ebenfalls in vielen Staaten gebräuchliches "drittes Kennzeichen", welches typisch im Innenraum eines Kraftfahrzeugs angeordnet wird, z.B. an der Frontscheibe oder einer Seitenscheibe des Kraftfahrzeugs.

In einer zweiten Ausgestaltung ist die Datenstruktur als Datenbank ausgebildet, die von einem geeignet ausgebildeten Lesegerät über ein Netzwerk angesprochen werden kann, um auf in der Datenbank abgelegte Daten, insbesondere Referenzidentifier, zumindest lesend zuzugreifen.

Die Datenbank kann insbesondere auf einem mit dem Internet oder einem anderen digitalen Kommunikationsnetzwerk verbundenen Medium, beispielsweise einem Server oder einem Netzwerkspeichermedium, abgelegt sein, die beide vorteilhaft cloudbasiert sein können.

Das erfindungsgemäße Verfahren bietet durch die Verschränkung von codierter Information mit der irregulären Mikrostruktur des Gegenstands einen sehr hohen Grad an Fälschungssicherheit. Das bedeutet, dass mit sehr guter Sicherheit von der Echtheit des validierten Gegenstands und der dort angeordneten codierten Information ausgegangen werden kann, wenn mittels des erfindungsgemäßen Verfahrens die extrahierte Information als "nicht manipuliert" kategorisiert wird.

Es wird darauf hingewiesen, dass in vielen Anwendungsfällen nach der Produktvalidierung eine Weiterverarbeitung der auf dem Gegenstand angeordneten Information nicht erforderlich ist. Diese Anwendungsfälle sind dadurch gekennzeichnet, dass sie in erster Linie der Überprüfung der Echtheit des mit der Information gekennzeichneten Gegenstands dienen. Beispielhaft hierfür sei die Überprüfung der Echtheit eines Zahlungsmittels oder eines amtlichen Dokuments genannt, oder auch die Überprüfung der Echtheit eines Kfz-Kennzeichenschilds.

Darüber hinaus gibt es selbstverständlich auch Anwendungsfälle, in denen die auf dem Gegenstand in codierter Form angeordnete Information wünschenswert oder erforderlich ist. Auf diese Anwendungsfälle bezieht sich eine besonders bevorzugte Weiterbildung des erfindungsgemäßen Verfahrens. In dieser Weiterbildung umfasst das Verfahren die folgenden weiteren Verfahrensschritte:
a. Extrahieren der in der graphischen Repräsentation codierten Information, und
b. Bereitstellen der extrahierten Information für eine Weiterverarbeitung.

Diese Verfahrensschritte werden bevorzugt nur dann ausgeführt, wenn bei der Produktvalidierung die extrahierte Information als "nicht manipuliert" kategorisiert wurde.

Diese Verfahrensschritte können aber auch vorteilhaft im Rahmen der Produktvalidierung ausgeführt werden.

Dies ist besonders vorteilhaft, wenn bei der Produktregistrierung der Referenzidentifier bei dessen Ablage in der Datenstruktur dergestalt mit der Information verknüpft wurde, dass unter Angabe der Information der verknüpfte Referenzidentifier aus der Datenstruktur abgerufen werden kann. Auf diese Weise kann bei der Produktvalidierung gezielt der eine Referenzidentifier unter Angabe der aus der graphischen Kennzeichnung decodierten Information aus der Datenstruktur abgerufen werden, der mit dem zu überprüfenden Gegenstand verknüpft ist. Dies ist insbesondere dann von Vorteil, wenn in der Datenstruktur nicht nur ein einzelner Referenzidentifier abgelegt ist, sondern eine Vielzahl von Referenzidentifiern, die ansonsten im Rahmen des erfindungsgemäßen Verfahrens mit dem Prüfidentifier auf Übereinstimmung geprüft werden müssten, bis entweder ein positives Prüfergebnis vorliegt, d.h. zumindest ein voreingestellter Mindestübereinstimmungsgrad erreicht wird, oder bis der Vergleich des Prüfidentifiers mit sämtlichen in der Datenstruktur abgelegten Referenzidentifiern ein negatives Prüfergebnis geliefert hat. Dies Weiterentwicklung des erfindungsgemäßen Verfahrens erlaubt daher eine besonders ressourcenschone Verfahrensführung.

In einer bevorzugten Weiterbildung des erfindungsgemäßen Verfahrens wird beim ortsaufgelösten Analysieren der Referenzaufnahme oder/und der Prüfaufnahme in den hellen oder/und in den dunklen Bereichen eine Lagekorrektur der zu analysierenden Aufnahme durchgeführt. Diese kann insbesondere dazu dienen, eine übereinstimmende Orientierung der sowohl in der Referenzaufnahme als auch der Prüfaufnahme vorhandenen graphischen Repräsentation der Information sicherzustellen. Hierdurch wird die Durchführung des erfindungsgemäß durchzuführenden Verfahrens zur Bestimmung des Übereinstimmungsgrads zwischen Referenzaufnahme und Bildaufnahme wesentlich vereinfacht. Darüber hinaus kann das Verfahren zuverlässigere Ergebnisse erzielen.

In einer weiteren bevorzugten Weiterbildung des erfindungsgemäßen Verfahrens wird beim ortsaufgelösten Analysieren der Referenzaufnahme oder/und der Prüfaufnahme in den hellen oder/und in den dunklen Bereichen eine Größenkorrektur der zu analysierenden Aufnahme durchgeführt. Diese kann insbesondere dazu dienen, eine übereinstimmende Größe der sowohl in der Referenzaufnahme als auch der Prüfaufnahme vorhandenen graphischen Repräsentation der Information sicherzustellen. Auch hierdurch wird die Durchführung des erfindungsgemäß durchzuführenden Verfahrens zur Bestimmung des Übereinstimmungsgrads zwischen Referenzaufnahme und Prüfaufnahme wesentlich vereinfacht. Darüber hinaus kann das Verfahren nochmals zuverlässigere Ergebnisse erzielen.

Bevorzugt werden sowohl die vorgenannte Lagekorrektur als auch die vorgenannte Größenkorrektur anhand zumindest einer Teilmenge der hellen oder/und dunklen Bereiche durchgeführt. Es können aber auch alle hellen oder/und dunklen Bereiche, aus denen die graphische Repräsentation der Information besteht, für die vorgenannten Korrekturschritte herangezogen werden.

Besonders einfach sind die vorgenannten Korrekturschritte auszuführen, wenn die graphische Repräsentation der Information in Form einer normierten maschinenlesbaren Schrift vorliegt, insbesondere in Form eines 1d-codes wie eines Barcodes, oder eines 2d-codes wie eines QR-Codes oder eines Datamatrix-Codes.

Aber auch die Verwendung von standardisierten Markern in der graphischen Repräsentation der Information, die deren Lage oder/und Größe anzeigen, hat sich als vorteilhaft erwiesen, insbesondere, wenn die graphische Repräsentation der Information nicht in Form einer normierten maschinenlesbaren Schrift vorliegt.

In einer weiteren bevorzugten Weiterbildung des erfindungsgemäßen Verfahrens werden beim ortsaufgelösten Analysieren der Referenz- oder/und Prüfaufnahme in den hellen oder/und in den dunklen Bereichen die analysierten hellen oder/und dunklen Bereiche in eine vorgegebene Anzahl von Teilabschnitten zerlegt, wobei diese Teilabschnitte besonders bevorzugt die gleiche Größe aufweisen.

Besonders bevorzugt werden dabei die charakteristischen Abmessungen der Teilabschnitte so gewählt, dass sie größer sind als die Strukturgröße der auf dem Gegenstand befindlichen Mikrostruktur, auf die im Rahmen des erfindungsgemäßen Verfahrens zurückgegriffen wird. Bevorzugt sind die charakteristischen Abmessungen der Teilabschnitte zumindest doppelt so groß wie die Strukturgröße der Mikrostruktur, besonders bevorzugt mindesten fünfmal so groß und insbesondere bevorzugt mindestens zehnmal so groß.

Diese Vorgehensweise erlaubt eine effiziente ortsaufgelöste Analyse der Referenz- bzw. Prüfaufnahme und erlaubt damit die Verwendung auch weniger performanter Prüfvorrichtungen zur Durchführung der Produktvalidierung.

In einer vorteilhaften Weiterbildung wird beim ortsaufgelösten Analysieren der Referenz- oder/und Prüfaufnahme den analysierten Bildabschnitten ein Helligkeits- oder Farbwert zugewiesen.

Insbesondere hat es sich als vorteilhaft herausgestellt, wenn der jeweils generierte Identifier zumindest auch auf den zugewiesenen Helligkeits- oder Farbwerten der analysierten Bildabschnitte basiert.

Weiterhin hat es sich als vorteilhaft herausgestellt, wenn der jeweils generierte Identifier zumindest auch auf Kennzeichnungen basiert, die die analysierten Bildabschnitte identifizieren. Beispielsweise können diese Kennzeichnungen die Bildabschnitte durchnummerieren oder die Lage der individuellen Bildabschnitte in einem Bezugskoordinatensystem bezeichnen.

Es sei angemerkt, dass bezüglich verfahrensbezogener Begriffsdefinitionen sowie der Wirkungen und Vorteile verfahrensgemäßer Merkmale vollumfänglich auf die Offenbarung sinngemäßer Definitionen, Wirkungen und Vorteile des erfindungsgemäßen Verfahrens verwiesen wird. Entsprechend können Offenbarungen hierin bezüglich des erfindungsgemäßen Verfahrens in sinngemäßer Weise zur Definition des erfindungsgemäßen Systems herangezogen werden, sofern dies nicht ausdrücklich ausgeschlossen ist. Auch können nachfolgende Offenbarungen bezüglich des erfindungsgemäßen Systems in sinngemäßer Weise zur Definition des erfindungsgemäßen Verfahrens herangezogen werden. Insofern kann auf eine Wiederholung von Erläuterungen sinngemäß gleicher Merkmale, deren Wirkungen und Vorteile des erfindungsgemäßen Verfahrens sowie des erfindungsgemäßen Systems zugunsten einer kompakteren Beschreibung verzichtet werden, ohne dass derartige Auslassungen als Einschränkung auszulegen wären.

Ein erfindungsgemäßes System ist zur Feststellung einer Manipulation eines Gegenstands, der mit einer graphischen Repräsentation einer Information gekennzeichnet ist vorgesehen, wobei der Gegenstand mit einer graphische Repräsentation der Information, insbesondere in Klarschrift oder in Form eines 1d-codes wie eines Barcodes oder eines 2d-codes wie eines QR-Codes oder eines als Datamatrix-Codes, gekennzeichnet ist unter Ausbildung heller und dunkler Bereiche. Weiterhin basiert die Funktionsweise des erfindungsgemäßen Systems darauf, dass der Gegenstand eine Oberfläche mit einer kontrastgebenden, irregulären Mikrostruktur aufweist.

Das erfindungsgemäße System nach Anspruch 9 weist mindestens die folgenden Komponenten auf:
a. eine Kamera, die dazu geeignet ist, eine Aufnahme des Oberflächenbereichs des Gegenstands, in dem die graphische Repräsentation der Information angeordnet ist, zu erstellen, wobei das Auflösungsvermögen der Kamera zur Auflösung der irregulären Mikrostruktur ausreicht,
b. eine Analyseeinheit, die dazu eingerichtet ist, von der Kamera erstellte Aufnahmen des Oberflächenbereichs des Gegenstands, in dem die graphische Repräsentation der Information angeordnet ist, in den hellen oder/und in den dunklen Bereichen ortsaufgelöst zu analysieren, um einen Identifier zu generieren,
c. eine Datenstruktur, in der zumindest ein Identifier bereitgestellt werden kann,
d. ein Mittel zum Abruf eines Identifiers aus der Datenstruktur
e. eine Vergleichseinheit, die dazu eingerichtet ist, ein Verfahren zur Bestimmung des Übereinstimmungsgrads zwischen zwei aus verschiedenen Aufnahmen eines Oberflächenbereichs jeweils eines Gegenstands, in dem die graphische Repräsentation der Information angeordnet ist, generierten Identifiern auszuführen,
f. eine Kategorisierungseinheit, die dazu eingerichtet ist, die auf dem Gegenstand angeordnete Information oder / und den Gegenstand selbst anhand des Ergebnisses des von der Vergleichseinheit ausgeführten Verfahrens wie folgt zu kategorisieren:
   i. "nicht manipuliert", wenn ein voreingestellter Mindestübereinstimmungsgrad erreicht wird, oder als
   ii. "manipuliert", wenn ein voreingestellter Mindestübereinstimmungsgrad nicht erreicht wird.

In einer bevorzugten Ausgestaltung sind die Analyseeinheit, die Decodiereinheit, die Vergleichseinheit oder/und die Kategorisierungseinheit softwareimplementiert ausgeführt.

In einer bevorzugten Weiterbildung sind zumindest zwei Funktionseinheiten der Gruppe bestehend aus Analyseeinheit, Decodiereinheit, Vergleichseinheit und Kategorisierungseinheit in einem gemeinsamen Gerät ausgebildet, bevorzugt zumindest drei Funktionseinheiten und besonders bevorzugt alle vier Funktionseinheiten.

Besonders bevorzugt ist das vorgenannte Gerät tragbar ausgestaltet, insbesondere als Notebook, als Tabletcomputer, als mobiles digitales Device oder als Smartphone.

In einer weiteren bevorzugten Ausgestaltung der Erfindung ist das vorgenannte Gerät in eine Maschine zur mechanischen Behandlung des Gegenstands integriert. Unter mechanischer Behandlung ist beispielsweise ein Bedrucken, Laminieren, Gravieren oder mechanisches Umformen zu verstehen.

In einer vorteilhaften Weiterbildung ist vorgesehen, dass die mechanische Behandlung des Gegenstands durch die betreffende Maschine nur dann freigegeben wird, wenn der überprüfte Gegenstand mittels des erfindungsgemäßen Verfahrens als "nicht gefälscht" bzw. "nicht manipuliert" erkannt wurde.

Insbesondere kann das vorgenannte Gerät in eine Kennzeichenpresse integriert sein, die dazu eingerichtet ist, ein Kfz-Kennzeichenschild mit einer gedruckten oder bevorzugt geprägten Kennzeichenlegende zu versehen.

Weiter bevorzugt ist die Kamera des erfindungsgemäßen Systems in das vorgenannte Gerät integriert.

Alternativ kann die Kamera auch separat von dem vorgenannten Gerät ausgebildet sein. Bevorzugt ist die Kamera in dieser Ausgestaltung in einem tragbaren Gerät in Form eines handheld device angeordnet, die dazu geeignet ist, von einer mit der Prüfaufgabe betrauten Person stets mit geführt zu werden, insbesondere in einem Mobiltelefon oder einem Tablet-Computer.

Weiterhin ist die separat von dem vorgenannten Gerät ausgebildete Kamera zu einer drahtlosen oder drahtgebundenen Kommunikation mit dem vorgenannten Gerät eingerichtet, insbesondere über ein drahtgebundenes oder drahtloses IP-basiertes Kommunikationsnetzwerk wie ein Mobilfunknetz oder über ein kurzreichweitiges drahtloses Kommunikationsnetz wie WiFi oder Bluetooth^{®}.

Die Kamera kann zur Verwendung im sichtbaren Spektralbereich geeignet oder sogar optimiert sein.

Alternativ oder ergänzend kann die Kamera dazu eingerichtet sein, außerhalb des sichtbaren Spektralbereichs zu arbeiten, insbesondere im IR- oder im UV-Bereich. Dies ist dann besonders vorteilhaft, wenn die graphische Repräsentation der Information so am Gegenstand angeordnet ist, dass sich ein zur Durchführung des erfindungsgemäßen Verfahrens ausreichender Kontrast nur oder insbesondere in zumindest einem der genannten Spektralbereiche ergibt.

In einer vorteilhaften Ausgestaltung des Verfahrens wird eine Aufnahme der graphischen Repräsentation der Information im sichtbaren Spektralbereich erzeugt.

In einer alternativen vorteilhaften Ausgestaltung des Verfahrens wird eine Aufnahme der graphischen Repräsentation der Information außerhalb des sichtbaren Spektralbereichs erzeugt, insbesondere im IR- oder UV-Bereich.

Bevorzugt weist die Kamera eine Steuereinheit auf, die dazu eingerichtet ist, das Aufnehmen eines Bilds mit der Kamera nur dann auszulösen, wenn ausreichende Belichtungsverhältnisse gegeben sind. Unter ausreichenden Belichtungsverhältnissen ist im Kontext der vorliegenden Erfindung zu verstehen, dass eine bei derartigen Belichtungsverhältnissen erstellte Aufnahme des Oberflächenbereichs des Gegenstands, in dem die graphische Repräsentation der Information angeordnet ist, von der Analyseeinheit zuverlässig zu analysieren.

In einer vorteilhaften Weiterbildung weist das erfindungsgemäße System weiterhin eine Decodiereinheit auf, die dazu eingerichtet ist, aus einer von der Kamera erstellten Aufnahme des Oberflächenbereichs des Gegenstands, in dem die graphische Repräsentation der Information angeordnet ist, die hierin codierte Information zu extrahieren.

In einer vorteilhaften Weiterbildung des erfindungsgemäßen Systems ist dieses dazu eingerichtet, die von der Decodiereinheit extrahierte Information für eine Weiterverarbeitung zur Verfügung zu stellen. Insbesondere kann die Decodiereinheit hierzu geeignet ausgebildet sein. Insbesondere kann das erfindungsgemäße System eine hierzu geeignete Schnittstelle ausbilden.

In einer weiteren vorteilhaften Weiterbildung des erfindungsgemäßen Systems weist dieses weiterhin eine nichtflüchtige Speichereinheit zur Aufnahme der Datenstruktur auf.

In einer Ausgestaltung der vorgenannten Weiterbildung des erfindungsgemäßen Systems ist die nichtflüchtige Speichereinheit auf dem Gegenstand selbst angeordnet.

In einer alternativen Ausgestaltung der vorgenannten Weiterbildung des erfindungsgemäßen Systems ist die nicht-flüchtige Datenstruktur separat von dem Gegenstand ausgebildet.

In einer besonders vorteilhaften Ausgestaltung des erfindungsgemäßen Systems ist die Datenstruktur dazu eingerichtet, dass ein Identifier zusammen mit der Information in der Datenstruktur abgelegt werden kann.

In einer besonders vorteilhaften Weiterbildung der vorgenannten Ausgestaltung ist die Datenstruktur so ausgebildet, dass ein in der Datenstruktur abgelegter Identifier anhand der Information aus der Datenstruktur abgerufen werden kann.

Vorteilhaft betrifft die in einem erfindungsgemäßen System Verwendung findende Information einen der folgenden Parameter:
a. Seriennummer des Gegenstands oder eines mit dem Gegenstand korrelierten weiteren Gegenstands,
b. Identität des Inhabers des Gegenstands.

Beispielhaft sei hier die Seriennummer eines Kfz Kennzeichenschilds genannt und als mit dem Kfz Kennzeichenschild korrelierter Gegenstand ein Kfz, welches durch eine Seriennummer in Form einer Fahrgestellnummer eindeutig identifiziert wird.

In der Ausgestaltung des erfindungsgemäßen Systems ist die Oberfläche des Gegenstands mit einer Glasbead-basierten retroreflektierenden Folie belegt, wie sie beispielsweise von der Firma 3M unter der Bezeichnung "Preclear Reflective License Plate Sheeting Series 4790" angeboten werden. Vergleichbare Folien werden auch von der Fa. Avery Dennison sowie von der Fa. Orafol angeboten. Glasbead-basierte retroreflektierende Folien basieren auf einer Vielzahl transparenter und intransparenter mikroskopischer Gaskugeln, die in der Ebene der Folie angeordnet und in eine transparente polymere Binderschicht eingebettet sind. Rückseitig ist diese Schicht verspiegelt, beispielsweise mittels einer dünnen metallischen Schicht, die insbesondere aus Aluminium bestehen kann. Die transparenten Glaskugeln wirken als Kugellinsen, hinter denen jeweils ein Reflektor angeordnet ist, so dass der Brennpunkt der Kugellinse auf dem Reflektor liegt, woraus die retroreflektive Eigenschaft einer solchen Folie resultiert.

Besonders vorteilhaft handelt es sich bei dem Gegenstand um ein Kfz-Kennzeichenschild, welches insbesondere retroreflektierend ausgebildet sein kann. Weiter vorteilhaft kann es sich bei dem Gegenstand um ein amtliches Dokument oder ein Zahlungsmittel handeln.

In einer vorteilhaften Weiterbildung weist das System weiterhin Lagekorrekturmittel auf. Diese sind dazu eingerichtet, beim ortsaufgelösten Analysieren einer Aufnahme des Oberflächenbereichs des Gegenstands, in dem die graphische Repräsentation der Information angeordnet ist, eine Lagekorrektur der zu analysierenden Aufnahme durchzuführen.

Bevorzugt sind die Lagekorrekturmittel dazu eingerichtet, die Lagekorrektur anhand zumindest einer Teilmenge der hellen oder/und dunklen Bereiche durchzuführen, bevorzugt aber aller hellen oder/und dunklen Bereiche.

In einer weiteren bevorzugten Weiterbildung des erfindungsgemäßen Systems weist dieses Größenkorrekturmittel auf. Diese sind dazu eingerichtet, beim ortsaufgelösten Analysieren der Referenzaufnahme oder/und der Prüfaufnahme in den hellen oder/und in den dunklen Bereichen eine Größenkorrektur der zu analysierenden Aufnahme durchzuführen. Diese kann insbesondere dazu dienen, eine übereinstimmende Größe der sowohl in der Referenzaufnahme als auch der Prüfaufnahme vorhandenen graphischen Repräsentation der Information sicherzustellen. Auch hierdurch wird die erfindungsgemäß durchzuführende Bestimmung des Übereinstimmungsgrads zwischen Referenzaufnahme und Prüfaufnahme wesentlich vereinfacht. Auf diese Weise ergibt sich ein System, welches es erlaubt, nochmals zuverlässigere Prüfergebnisse zu erzielen.

In einer besonders bevorzugten Weiterbildung des erfindungsgemäßen Systems ist die Analyseeinheit dazu eingerichtet, beim ortsaufgelösten Analysieren einer von der Kamera erstellten Aufnahme des Oberflächenbereichs des Gegenstands, in dem die graphische Repräsentation der Information angeordnet ist, die analysierten hellen oder/und dunklen Bereiche in eine vorgegebene Anzahl von Teilabschnitten zu zerlegen.

In dieser Ausgestaltung hatte sich als besonders vorteilhaft erwiesen, wenn die Analyseeinheit dazu eingerichtet ist, den analysierten Teilabschnitten einen Helligkeits- oder Farbwert zuzuweisen.

Unter den vorgenannten Voraussetzungen ergibt sich ein besonders vorteilhaftes erfindungsgemäßes System, wenn ein von der Analyseeinheit generierter Identifier zumindest auch auf den zugewiesenen Helligkeits- oder Farbwerten basiert.

Weitere Vorteile können sich dann ergeben, wenn ein von der Analyseeinheit generierter Identifier weiterhin auf Kennzeichnungen basiert, die die analysierten Bildabschnitte identifizieren.

In einer besonders bevorzugten Ausgestaltung weist das erfindungsgemäße System zwei voneinander getrennt ausgebildete Funktionseinheiten auf.

Es wird darauf hingewiesen, dass sich der Anmelder vorbehält, nebengeordnete Ansprüche zu formulieren, die auf die erste oder die zweite Funktionseinheit in Alleinstellung gerichtet sind oder auf ein System, welches sowohl eine erste als auch eine zweite Funktionseinheit aufweist. Diese Gegenstände werden vom Anmelder als zur vorliegenden Erfindung gehörend angesehen.

Eine erste Funktionseinheit ist zur Durchführung einer Produktregistrierung vorgesehen und weist Folgendes auf:
a. eine Kamera, die dazu geeignet ist, eine Aufnahme des Oberflächenbereichs des Gegenstands, in dem die graphische Repräsentation der Information angeordnet ist, zu erstellen, wobei das Auflösungsvermögen der Kamera zur Auflösung der irregulären Mikrostruktur ausreicht,
b. eine Analyseeinheit, die dazu eingerichtet ist, von der Kamera erstellte Aufnahmen des Oberflächenbereichs des Gegenstands, in dem die graphische Repräsentation der Information angeordnet ist, in den hellen oder/und in den dunklen Bereichen ortsaufgelöst zu analysieren, um einen Identifier zu generieren,
c. eine Datenstruktur, in dem zumindest ein Identifier bereitgestellt werden kann

Eine zweite Funktionseinheit ist zur Durchführung einer Produktvalidierung vorgesehen und weist Folgendes auf:
a. eine Kamera, die dazu geeignet ist, eine Aufnahme des Oberflächenbereichs des Gegenstands, in dem die graphische Repräsentation der Information angeordnet ist, zu erstellen, wobei das Auflösungsvermögen der Kamera zur Auflösung der irregulären Mikrostruktur ausreicht,
b. eine Analyseeinheit, die dazu eingerichtet ist, von der Kamera erstellte Aufnahmen des Oberflächenbereichs des Gegenstands, in dem die graphische Repräsentation der Information angeordnet ist, in den hellen oder/und in den dunklen Bereichen ortsaufgelöst zu analysieren, um einen Identifier zu generieren,
d. ein Mittel zum Abrufen eines Identifiers aus der Datenstruktur
e. eine Vergleichseinheit, die dazu eingerichtet ist, ein Verfahren zur Bestimmung des Übereinstimmungsgrads zwischen zwei aus verschiedenen Aufnahmen eines Oberflächenbereichs jeweils eines Gegenstands, in dem die graphische Repräsentation der Information angeordnet ist, generierten Identifiern auszuführen, und
f. eine Kategorisierungseinheit, die dazu eingerichtet ist, die auf dem Gegenstand angeordnete Information oder / und den Gegenstand selbst anhand des Ergebnisses des von der Vergleichseinheit ausgeführten Verfahrens wie folgt zu kategorisieren:
   i. "nicht manipuliert", wenn ein voreingestellter Mindestübereinstimmungsgrad erreicht wird, oder als
   ii. "manipuliert", wenn ein voreingestellter Mindestübereinstimmungsgrad nicht erreicht wird.

Die erste Funktionseinheit ist bevorzugt als stationäre Einheit ausgebildet und weiter bevorzugt räumlich angrenzend oder in der Produktionsstätte angeordnet, in der der mit der grafischen Repräsentation der Informationen gekennzeichnete Gegenstand hergestellt wird.

Die zweite Funktionseinheit ist bevorzugt als mobile Einheit ausgebildet und dazu vorgesehen, im Feld zur Überprüfung der Authentizität von Gegenständen bzw. einer darauf angeordneten Information, bevorzugt mittels des erfindungsgemäßen Verfahrens, verwendet zu werden. Insbesondere kann die zweite Funktionseinheit in Form handheld device ausgebildet sein, die dazu geeignet ist, von einer mit der Prüfaufgabe betrauten Person stets mit geführt zu werden.

In einer weiteren erfindungsgemäßen Ausgestaltung ist vorgesehen, dass die Kamera der ersten Funktionseinheit und die Kamera der zweiten Funktionseinheit identisch sind, d.h. dass sich die erste und die zweite Funktionseinheit eine gemeinsame Kamera teilen.

In einer ersten vorteilhaften Ausgestaltung der zweiten Funktionseinheit sind sämtliche erfindungsgemäß vorgesehenen Mittel in einem einzigen Gerät angeordnet, insbesondere in einer mobilen Einheit wie vorstehend beschrieben. In dieser Ausgestaltung kann eine Produktvalidierung auch dann zuverlässig durchgeführt werden, wenn keine Netzwerkverbindung zu einer zentralen Registrierungsstelle besteht. Hierdurch ist eine sichere Funktion auch in Gegenden mit ungenügender Mobilfunkabdeckung gewährleistet.

In dieser ersten Ausgestaltung der zweiten Funktionseinheit kann vorgesehen sein, die gesamte Datenstruktur auf dem einzigen Gerät der zweiten Funktionseinheit unterzubringen. Die Datenstruktur umfasst dabei die Datenbank, in der zumindest die Identifier sämtlicher registrierter Gegenstände (d.h. die Gesamtheit aller erfassten Identifier), bevorzugt aber jeweils auch die zugehörige Information abgelegt sind.

In einer speziellen Weiterbildung umfasst die der Datenstruktur zugeordnete Datenbank nur eine Untergruppe der Identifier sämtlicher registrierter Gegenstände. Diese Untergruppe kann sich auf Gegenstände beschränken, die einer ausgewählten Benutzergruppe zugeordnet sind. Beispielhaft seien hier die Kfz-Kennzeichen einer polizeilichen oder militärischen Einheit genannt.

Vorteilhaft ist das einzige Gerät der zweiten Funktionseinheit dazu eingerichtet, automatisch den Datenstand der Datenstruktur mit dem einer zentralen Registrierungsstelle abzugleichen, sobald eine bevorzugt IP-basierte Kommunikationsverbindung zwischen dem Gerät und der zentralen Registrierungsstelle etabliert ist.

In der vorstehend beschriebenen ersten vorteilhaften Ausgestaltung kann eine Produktvalidierung auch dann zuverlässig durchgeführt werden, wenn keine Netzwerkverbindung zu einer zentralen Registrierungsstelle besteht. Hierdurch ist eine sichere Funktion auch in Gegenden mit ungenügender Mobilfunkabdeckung gewährleistet.

In einer zweiten vorteilhaften Ausgestaltung der zweiten Funktionseinheit sind die erfindungsgemäß vorgesehenen Mittel auf mindestens zwei Geräte verteilt. Die Kamera ist in einer mobilen Einheit wie vorstehend beschrieben angeordnet.

Alle weiteren erfindungsgemäß vorgesehenen Mittel sind in einer separat ausgebildeten stationären Einheit angeordnet, mit der die mobile Einheit in einer Datenkommunikation steht, vorteilhaft über ein insbesondere IP-basiertes Kommunikationsnetzwerk.

Die mobile Einheit ist dazu eingerichtet, Aufnahmen, die von der in der mobilen Einheit angeordneten Kamera aufgenommen wurden, über die Datenkommunikationsverbindung an die stationäre Einheit zu übertragen. In der stationären Einheit werden dann die zur Produktvalidierung erforderlichen Schritte ausgeführt.

Bevorzugt ist die stationäre Einheit dazu eingerichtet, das Ergebnis der durchgeführten Produktvalidierung über die Datenkommunikationsverbindung an die mobile Einheit zu übermitteln. Dort wird das übermittelte Prüfergebnis einem Benutzer z.B. über eine in die mobile Einheit integrierte Anzeigeeinheit zur Kenntnis gebracht.

In dieser Ausgestaltung können sämtliche sicherheitsrelevanten Bestandteile des erfindungsgemäßen Systems in der stationären Einheit angeordnet werden, wo sie deutlich einfacher vor einem unautorisierten Zugriff Dritter geschützt werden können.

Die vorstehend beschriebene stationäre Einheit muss nicht zwingend stationär in dem Sinne sein, dass sie nicht von einem Ort an einen anderen verbracht werden könnte. Tatsächlich ist die stationäre Einheit in einer vorteilhaften Weiterbildung auf einem mobilen Computer angeordnet, der - anders als die mobile Einheit - auf einfache Weise einem Zugriff unautorisierter Dritter entzogen werden kann, z.B. durch Anordnung im geschützten Innenraum eines Kfz. Auch eine feste mechanische Verbindung mit dem Kfz kann einfach realisiert werden.

Auch eine solche "stationäre" Einheit bietet darüber hinaus den Vorteil, dass sie ohne weiteres mit einem ausreichend großen Datenspeicher zur Aufnahme der Datenstruktur ausgerüstet werden kann. Die Datenstruktur umfasst dabei die Datenbank, in der zumindest die Identifier sämtlicher registrierter Gegenstände (d.h. die Gesamtheit aller erfassten Identifier), bevorzugt aber jeweils auch die zugehörige Information, abgelegt sind. Aber auch eine beschränkte Datenbank ist möglich, in der nur eine Teilmenge sämtlicher registrierter Gegenstände (d.h. die Gesamtheit aller erfassten Identifier), bevorzugt aber jeweils auch die zugehörige Information, abgelegt ist.

Handelt es sich bei dem zu prüfenden Gegenstand tatsächlich um ein an einem Kfz angebrachtes Kfz-Kennzeichenschild, so hat sich die folgende Weiterbildung des erfindungsgemäßen Verfahrens sowie des erfindungsgemäßen Systems als besonders vorteilhaft herausgestellt:
Aufgrund der rauen Einsatzbedingungen von Kfz-Kennzeichenschildern ist eine Beschädigung der Schildoberfläche im Bereich der am Schild angebrachten graphischen Repräsentation der Information nicht gänzlich auszuschließen. Dies gilt insbesondere für Kfz-Kennzeichen, die an der Fahrzeugfront angebracht sind. Eine solche hätte bei einer Überprüfung mittels des erfindungsgemäßen Verfahrens bzw. Systems u.U. ein falsch negatives Validierungsergebnis zur Folge. Um dieses Risiko zu minimieren ist in einer vorteilhaften Weiterbildung vorgesehen, nicht nur ein, sondern alle (in der Regel zwei) am Fahrzeug vorgesehenen Kfz-Kennzeichenschilder erfindungsgemäß zu registrieren und für eine Produktvalidierung heranzuziehen. Das erfindungsgemäße Verfahren wird um einen Prüfschritt erweitert, in dem überprüft wird, ob die Ergebnisse aller durchgeführten Produktvalidierungen übereinstimmen oder/und ob zumindest ein positives Ergebnis einer Produktvalidierung vorliegt. Ist dies gegeben, so wird ein positives Prüfergebnis für das mit den überprüften Kfz-Kennzeichenschildern ausgerüstete Fahrzeug generiert ("Kennzeichen OK"). Vorteilhaft wird zusätzlich ein Warnhinweis für einen Benutzer generiert, der auf das Vorliegen eines negativen Prüfhinweises hinweist, so dass ggf. eine genauere Prüfung des als fehlerhaft beurteilten Kfz-Kennzeichenschilds erfolgen kann.

Liegen übereinstimmend zwei negative Prüfergebnisse vor, so wird ein negatives Prüfergebnis für das mit den überprüften Kfz-Kennzeichenschildern ausgerüstete Fahrzeug generiert ("Kennzeichen nicht OK").

Das System wird um ein zur Ausführung eines solchen Prüfschritts geeignetes Mittel ergänzt.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen:
- Fig. 1: eine schematische Darstellung der ersten Funktionseinheit eines ersten Ausführungsbeispiels eines Systems gemäß der Erfindung,
- Fig. 2: den auf dem Kennzeichenschild gemäß Fig. 1 angebrachten Datamatrix-Code,
- Fig. 3: eine Ausschnittvergrößerung des Datamatrix-Codes aus Fig. 2,

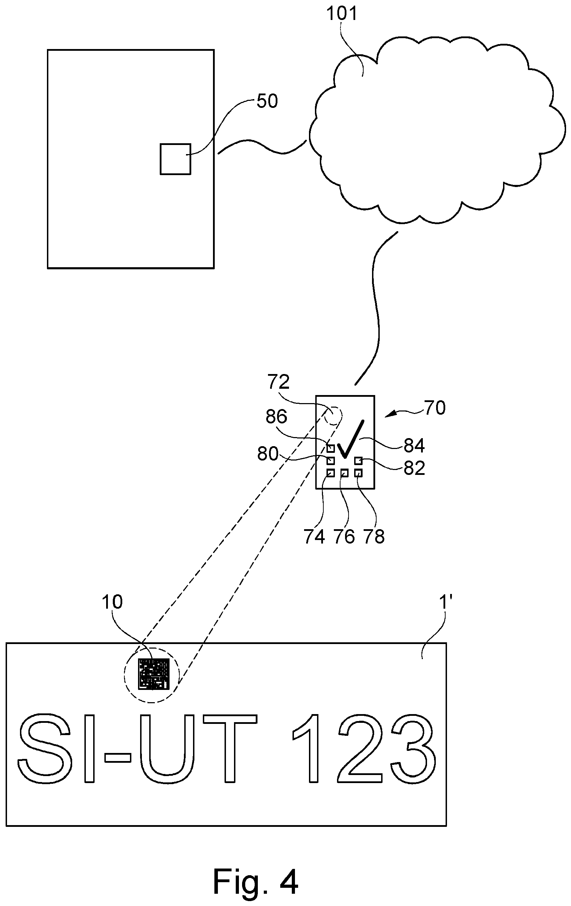

- Fig. 4: eine schematische Darstellung der zweiten Funktionseinheit eines ersten Ausführungsbeispiels eines Systems gemäß der Erfindung, und
- Fig. 5: eine schematische Darstellung der zweiten Funktionseinheit eines zweiten Ausführungsbeispiels eines Systems gemäß der Erfindung.

In den Figuren sind hinsichtlich ihrer Funktion gleichwertige Teile stets mit denselben Bezugszeichen versehen, so dass diese in der Regel auch nur einmal beschrieben werden.

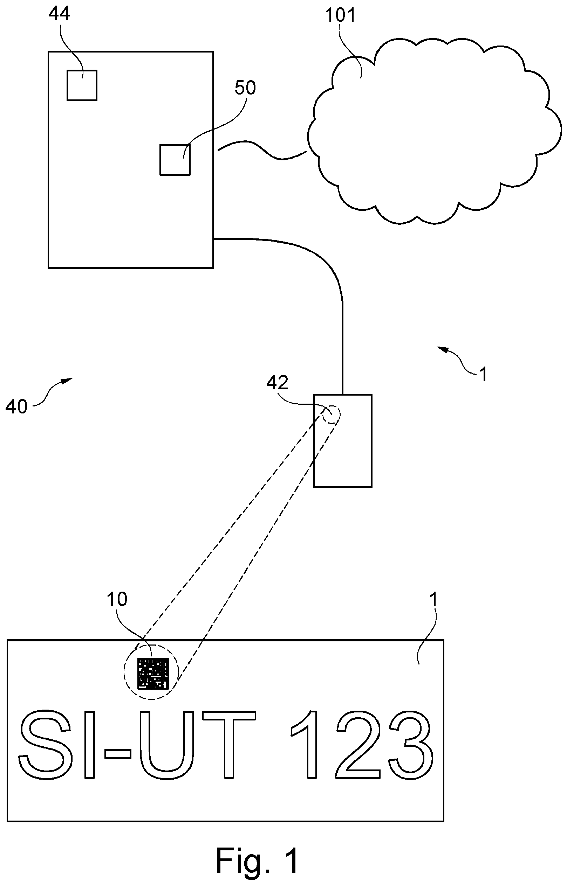

Figur 1 zeigt einen Ausschnitt eines ersten Ausführungsbeispiels eines erfindungsgemäßen Systems 100, welches zur Feststellung einer Manipulation eines Gegenstands, der mit einer graphischen Repräsentation einer Information gekennzeichnet ist, vorgesehen ist. Dabei kann die Manipulation sowohl den Gegenstand selbst als auch die auf dem Gegenstand angeordnete Information betreffen.

Der Gegenstand, bei dem es sich im Ausführungsbeispiel um ein Kfz-Kennzeichenschild 1 handelt, ist mit einer graphischen Repräsentation der Information in Form eines Datamatrix-Codes 10 gekennzeichnet. Der Datamatrix-Code 10 bildet dabei helle und dunkle Bereiche 11 aus, die als Module bezeichnet werden.

Im gezeigten Ausführungsbeispiel codiert der auf dem Kennzeichenschild 1 angeordnete Datamatrix-Code 10 eine Seriennummer der Platine des Kfz Kennzeichenschilds 1.

Das Kfz Kennzeichenschild 1 ist mittels einer glasbeadbasierten Folie retroreflektierend ausgestaltet. Derartige Folien basieren auf einer Vielzahl von transparenten sowie weiß eingefärbten (so genannten blinden) Glaskugeln, deren Durchmesser typisch im Bereich zwischen zehn und 100 µm liegt, die in einer gemeinsamen Ebene parallel zur Ebene der Kennzeichenplatine angeordnet und in eine transparente Binderschicht eingebettet sind. Die transparente Binderschicht ist rückseitig mittels einer dünnen Metallschicht, beispielsweise aus Aluminium oder Silber, verspiegelt. Derartige glasbeadbasierte retroreflektierende Folien sind aus dem Stand der Technik vielfältig bekannt. Dabei sind einerseits die in die Folie eingebetteten Glas Kugeln in einem gewissen Umfang irregulär angeordnet, anderseits ist die räumliche Verteilung von transparenten sowie blinden Glaskugeln zufällig und damit in einem hohen Maße irregulär. Dies führt dazu, dass das Kfz Kennzeichenschild 1 auf seiner retroreflektierenden Seite eine Oberfläche mit einer in einem ausreichenden Maße kontrastgebenden, irregulären Mikrostruktur aufweist. Der Kontrast der Mikrostruktur wird durch eine Laserbeschriftung der Folie noch vertieft.

Im gezeigten Ausführungsbeispiel ist der Datamatrix Code 10 mittels einer Laserbeschriftung in das Material der retroreflektierenden Folie eingebracht. Die Laserbeschriftung ist in diesem Ausführungsbeispiel nicht auf eine rein oberflächliche Veränderung des Materials der Folie beschränkt. Durch diese lokale, irreversible Veränderung des Materials der retroreflektierenden Folie ist eine Manipulation des Datamatrix-Codes, d.h. der graphischen Codierung der Information (= Seriennummer der Platine) erschwert.

Im gezeigten Ausführungsbeispiel weist das erfindungsgemäße System 100 zwei voneinander getrennt ausgebildete Funktionseinheiten 40, 70 auf.

Eine erste Funktionseinheit 40 ist zur Durchführung einer Produktregistrierung vorgesehen. Sie ist in Figur 1 dargestellt. Sie ist als stationäre Einheit ausgebildet und dazu vorgesehen, bevorzugt räumlich angrenzend an oder in der Produktionsstätte angeordnet zu werden, in der der mit der grafischen Repräsentation der Informationen gekennzeichnete Gegenstand, d.h. das Kfz-Kennzeichenschild 1, hergestellt wird.

Die erste Funktionseinheit 40 umfasst eine separat ausgebildete erste Kamera 42, die in Datenverbindung mit der ersten Funktionseinheit 40 steht und dazu eingerichtet ist, eine Aufnahme des Oberflächenbereichs des Kennzeichenschilds 1, in dem die graphische Repräsentation der Information, d.h. der Datamatrix-Code 10, angeordnet ist, zu erstellen, wobei das Auflösungsvermögen der Kamera 42 zur Auflösung der von den in die retroreflektierende Folie eingebetteten Glasbeads erzeugten irregulären Mikrostruktur ausreicht.

Weiterhin umfasst die erste Funktionseinheit 40 eine erste Analyseeinheit 44, die dazu eingerichtet ist, von der ersten Kamera 42 erstellte Aufnahmen des Oberflächenbereichs des Kennzeichenschilds 1, in dem die graphische Repräsentation der Information, d.h. der Datamatrix-Code 10 angeordnet ist, in den hellen oder/und in den dunklen Bereichen 11 ortsaufgelöst zu analysieren, um einen ersten Identifier zu generieren, den sogenannten Referenzidentifier, der unmittelbar und eindeutig mit dem registrierten Kfz- Kennzeichenschild 1 verknüpft ist.

Weiterhin umfasst die erste Funktionseinheit 40 eine Datenstruktur 50, in dem zumindest ein Identifier bereitgestellt werden kann. Diese ist als Datenbank ausgebildet, die von einem geeignet ausgebildeten Lesegerät über ein Netzwerk, z.B. das Internet 101, angesprochen werden kann, um auf in der Datenbank abgelegte Daten, insbesondere Referenzidentifier, zumindest lesend zuzugreifen.

Die Datenbank ist auf einem mit dem Internet 101 verbundenen Server abgelegt und über dieses von praktisch jedem Punkt der Welt aus erreichbar.

Die Datenstruktur 50 ist so ausgestaltet, dass bei der Produktregistrierung der Referenzidentifier bei seiner Ablage in der Datenstruktur 50 dergestalt mit der in der graphischen Darstellung codierten Information verknüpft werden kann, dass unter Angabe der Information der verknüpfte Referenzidentifier aus der Datenstruktur 50 abgerufen werden kann.

Die zweite Funktionseinheit 70 ist zur Durchführung einer Produktvalidierung im Feld vorgesehen, d.h. zur Überprüfung der Echtheit eines in der Regel an einem Kraftfahrzeug montierten Kfz Kennzeichenschilds.

Sie ist im Gegensatz zur ersten Funktionseinheit 40 als mobile Einheit ausgebildet. Dazu ist die zweite Funktionseinheit 70 als handheld device ausgebildet, welches dazu geeignet ist, von einer mit der Überprüfung von Kfz-Kennzeichenschildern betrauten Person stets mit geführt zu werden.

Die zweite Funktionseinheit 70 weist eine zweite Kamera 72 auf, die in das Gehäuse der zweiten Funktionseinheit 70 integriert ist und wie die erste Kamera 42 dazu eingerichtet ist, eine Aufnahme des Oberflächenbereichs des Kennzeichenschilds 1, in dem die graphische Repräsentation der Information, also der Datamatrix-Code 10 angeordnet ist, zu erstellen, wobei das Auflösungsvermögen auch der zweiten Kamera 72 zur Auflösung der irregulären Mikrostruktur ausreicht.

Weiterhin weist die zweite Funktionseinheit 70 eine zweite Analyseeinheit 74 auf, die dazu eingerichtet ist, von der zweiten Kamera 72 erstellte Aufnahmen des Oberflächenbereichs des Kennzeichenschilds, in dem die graphische Repräsentation der Information angeordnet ist, in den hellen oder/und in den dunklen Bereichen 11 ortsaufgelöst zu analysieren, um einen zweiten Identifier zu generieren, einen "Prüfidentifier".

Die zweite Prüfeinheit 70 weist weiterhin eine Decodiereinheit 76 auf, die dazu eingerichtet ist, aus einer von der zweiten Kamera 72 erstellten Aufnahme des Oberflächenbereichs des Kennzeichenschilds 1, in dem die graphische Repräsentation der Information angeordnet ist, die hierin codierte Information zu extrahieren.

Dabei ist die zweite Prüfeinheit 70 weiterhin dazu eingerichtet, die von der Decodiereinheit 76 extrahierte Information für eine Weiterverarbeitung zur Verfügung zu stellen. Hierzu bildet die zweite Prüfeinheit 70 eine hierzu geeignete Schnittstelle für eine Datenkommunikation aus, z.B. über near field communication, WiFi, BlueTooth^{®} oder auch über ein Mobilfunknetz. Über zumindest eine dieser Schnittstellen ist eine IP-basierte Kommunikation möglich, insbesondere für einen Zugang zum Internet 101.

Weiterhin umfasst die zweite Funktionseinheit 70 ein Mittel zum Abrufen eines Identifiers 78 aus der Datenstruktur 50. Dabei ist dieses Mittel 78 dazu eingerichtet, gezielt den einen Referenzidentifier aus der Datenstruktur 50 abzurufen, der gemeinsam mit der Information, die in der graphischen Kennzeichnung codiert und auf dem Kennzeichenschild 1 abgelegt ist, in der Datenstruktur 50 abgelegt ist.

In der zweiten Funktionseinheit 70 ist weiterhin eine Vergleichseinheit 80 vorgesehen, die dazu eingerichtet ist, ein Verfahren zur Bestimmung des Übereinstimmungsgrads zwischen zwei Identifiern auszuführen, wobei es sich hierbei um einen aus der Datenstruktur 50 abgerufenen Referenzidentifier und den mittels der zweiten Funktionseinheit 70 generierten Prüfidentifier handelt.

Schließlich ist in der zweiten Funktionseinheit 70 eine Kategorisierungseinheit 82 vorgesehen, die dazu eingerichtet ist, die auf dem Kennzeichenschild 1 in Form eines Datamatrix-Codes 10 angeordnete Information oder / und das Kennzeichenschild 10 selbst anhand des Ergebnisses des von der Vergleichseinheit 80 ausgeführten Verfahrens wie folgt zu kategorisieren:
i. "nicht manipuliert", wenn ein voreingestellter Mindestübereinstimmungsgrad erreicht wird, oder als
ii. "manipuliert", wenn ein voreingestellter Mindestübereinstimmungsgrad nicht erreicht wird.

In der ersten bzw. zweiten Funktionseinheit 40, 70 sind die Analyseeinheit 44, 74, die Decodiereinheit 76, die Vergleichseinheit 80 und die Kategorisierungseinheit 82 (soweit vorhanden) softwareimplementiert ausgeführt. Die zugehörige Software wird auf einer CPU ausgeführt, die bei der zweiten Funktionseinheit 70 gemeinsam mit der zweiten Kamera 72 in einem gemeinsamen Gehäuse angeordnet ist. Im gezeigten Ausführungsbeispiel ist die zweite Funktionseinheit 70 als Smartphone ausgebildet. Das von der Kategorisierungseinheit 82 ermittelte Ergebnis wird auf der Anzeige 84 des Smartphones visuell dargestellt.

Im gezeigten Ausführungsbeispiel weist zumindest die zweite Funktionseinheit 70 Lagekorrekturmittel 86 auf. Diese sind dazu eingerichtet, beim ortsaufgelösten Analysieren einer Aufnahme des Oberflächenbereichs des Kennzeichenschilds 1, in dem die graphische Repräsentation der Information angeordnet ist, eine Lagekorrektur der zu analysierenden Aufnahme durchzuführen.

Die Lagekorrekturmittel 86 dazu eingerichtet, eine Lagekorrektur anhand zumindest einer Teilmenge der hellen oder/und dunklen Bereiche 11 des auf dem Kennzeichenschild 1 befindlichen Datamatrix-Codes 10 durchzuführen.

Darüber hinaus weist im gezeigten Ausführungsbeispiel die zweite Funktionseinheit 70 weiterhin Größenkorrekturmittel 88 auf. Diese sind dazu eingerichtet, beim ortsaufgelösten Analysieren der der Prüfaufnahme in den hellen oder/und in den dunklen Bereichen 11 eine Größenkorrektur der zu analysierenden Aufnahme durchzuführen.

Die in der zweiten Funktionseinheit 70 vorgesehenen Lagekorrekturmittel 86 und Größenkorrekturmittel 88 dienen dazu, eine übereinstimmende Lage wie Größe des Data Matrix Codes 10 sowohl in der Referenzaufnahme als auch der Prüfaufnahme sicherzustellen. Es ist im gezeigten System 1 also vorgesehen, eine Registrierung von Referenzaufnahme und Prüfaufnahme durchzuführen.

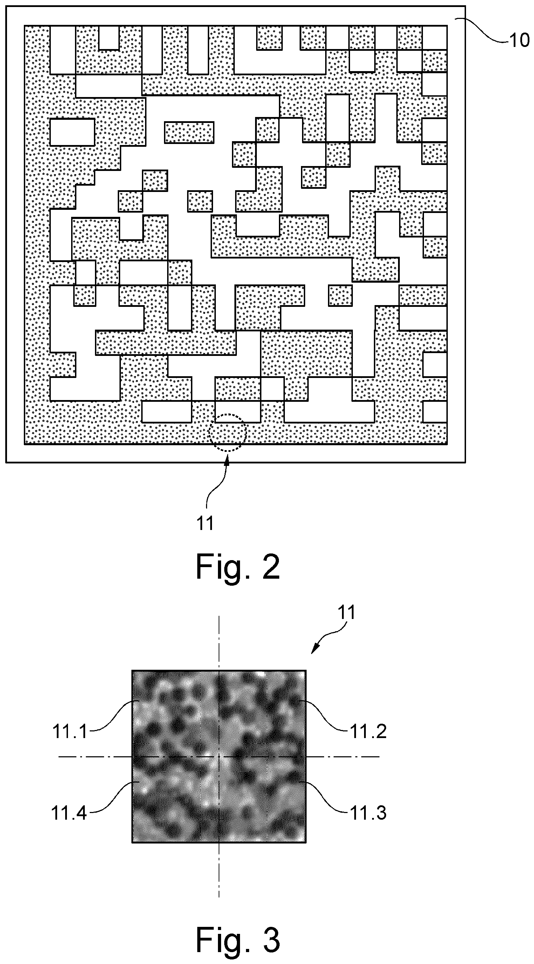

Im erfindungsgemäßen System 1 gemäß dieses Ausführungsbeispiels sind beide Analyseeinheiten 44, 74 dazu eingerichtet, beim ortsaufgelösten Analysieren einer von einer der Kameras 42, 72 erstellten Aufnahme des Oberflächenbereichs des Kennzeichenschilds, in dem der Datamatrix Code 10 angeordnet ist, die den Data Matrix Code 10 ausbildenden hellen oder/und dunklen Bereiche 11, die auch als Module bezeichnet werden, in eine vorgegebene Anzahl von Teilabschnitten zu zerlegen. Ein Datamatrix Code besteht grundsätzlich aus einer Struktur von n × n Quadraten, die hell oder dunkel sein können. Ein Datamatrix-Code 10 gemäß dieses Ausführungsbeispiels ist in Fig. 2 exemplarisch dargestellt. Der Datamatrix-Code 10 weist 10 × 10 Module 11 auf. Im gezeigten Ausführungsbeispiel ist vorgesehen, dass jedes dieser Module 11 nochmals regelmäßig in vier quadratische Teilabschnitte 11.1 - 11.4 aufgeteilt wird. Jedem dieser quadratischen Teilabschnitte 11.1 - 11.4 ist eine eindeutige Kennzeichnung zugewiesen. Figur 3 zeigt exemplarisch ein willkürlich herausgegriffenes, dunkel eingefärbtes Modul 11 des Datamatrix-Codes aus Figur 2.

Beide Analyseeinheiten 44, 74 sind dazu eingerichtet, den jeweils analysierten Teilabschnitten 11.1 - 11.4 einen Helligkeitswert zuzuweisen. Die Auflösung der Helligkeitswerte beträgt 8 bit. Die von den Analyseeinheiten 44, 74 generierten Identifier basieren auf den eindeutigen Kennzeichnungen der quadratischen Teilabschnitte 11.1 -11.4 sowie den Helligkeitswerten, die den jeweiligen Teilabschnitten zugewiesen wurden.

Besonders gute Ergebnisse konnten erzielt werden, wenn die ortsaufgelöste Analyse sowohl der Referenzaufnahme als auch der Prüfaufnahme auf die dunklen Bereiche 11 des analysierten Datamatrix-Codes 10 beschränkt wurden. Die dunklen Bereiche 11 des mittels Lasermarkierung der retroreflektierenden Folie erzeugten Datamatrix-Codes 10 zeigten eines sehr gut auflösbare räumlich variierende Helligkeitsverteilung mit hohem Kontrast, deren Verteilung mit der Verteilung der darunter liegenden Glasbeads zu korrelieren schien. Diese Korrelation ist im Rahmen der vorliegenden Erfindung jedoch unerheblich, relevant ist nur das Vorhandensein einer irregulären, auflösbaren Helligkeitsverteilung.

Nachfolgend wird beispielhaft ein Ausführungsbeispiel eines erfindungsgemäßen Verfahrens angegeben, welches zur Überprüfung der Echtheit eines Kfz Kennzeichenschild vorgesehen ist. Dieses Verfahren wird mittels des vorstehend beschriebenen ersten Ausführungsbeispiels eines erfindungsgemäßen Systems ausgeführt. Hierbei wird wiederum davon ausgegangen, dass eine grafische Repräsentation der Information in Form eines Datamatrix-Codes 10 vorliegt, welcher wie vorstehend beschrieben in Form einer Lasermarkierung in die glasbeadbasierte Folie eines retroreflektierenden Kfz-Kennzeichenschilds 1 eingebracht ist.

Für die Produktregistrierung eines solchen Kfz Kennzeichenschilds 1 werden die folgenden Verfahrensschritte ausgeführt:
a. Erstellen einer Referenzaufnahme des Oberflächenbereichs des Kennzeichenschilds 1, in dem der Datamatrix Code 10 angeordnet ist, mittels der ersten Kamera 42,
b. Ortsaufgelöstes Analysieren der Referenzaufnahme in den dunklen Bereichen 11 des Datamatrix-Codes 10 mittels der ersten Analyseeinheit 44, um einen Referenzidentifier zu generieren,
c. Bereitstellen des Referenzidentifiers in der Datenstruktur 50, die als Datenbank ausgebildet ist.

Die nachfolgenden Verfahrensschritte, die der Produktvalidierung dienen, werden zeitlich nachgelagert ausgeführt, um ein Kennzeichenschild 1', das mit dem in den ersten Schritten mit der graphischen Darstellung der Information gekennzeichneten Kennzeichenschild 1 zumindest nach dem ersten Anschein identisch ist, dahingehend zu überprüfen, um es sich tatsächlich um das im Rahmen der Produktregistrierung registrierten Kennzeichenschild 1 handelt bzw. ob das Kennzeichenschild 1' mit der Information gekennzeichnet ist, die bei der Produktregistrierung bereits auf dem registrierten Kennzeichenschild 1 aufgebracht war. Das Verfahren liefert nur dann ein positives Prüfergebnis, wenn es sich bei dem validierten Kennzeichenschild 1' tatsächlich um das registrierte Kennzeichenschild handelt und wenn die Produktvalidierung ergibt, dass die Information, mit der das validierte Kennzeichenschild 1' gekennzeichnet ist, mit der im Registrierungsschritt auf dem registrierten Kennzeichenschild 1 vorhandenen Information identisch ist.

Für die Produktvalidierung werden die folgenden weiteren Verfahrensschritte ausgeführt:
d. Erstellen einer Prüfaufnahme des Oberflächenbereichs eines zu validierenden Kennzeichenschilds 1', in dem die graphische Repräsentation einer Information, d.h. ein Datamatrix Code 10', angeordnet ist, mittels der zweiten Kamera 72,
e. Ortsaufgelöstes Analysieren der Prüfaufnahme in den dunklen Bereichen 11', um einen Prüfidentifier zu generieren, mittels der zweiten Analyseeinheit 74,
f. Decodieren der Information aus dem Data Matrix Code 10' anhand der hierzu vorgesehenen Decodiereinheit 76,
g. Abrufen eines Referenzidentifiers aus der Datenstruktur 50 anhand der Information, die aus dem Datamatrix-Code 10' decodiert wurde,
h. Ausführen eines Verfahrens zur Bestimmung des Übereinstimmungsgrads zwischen dem Prüfidentifier und dem aus der Datenstruktur abgerufenen Referenzidentifier mittels der Vergleichseinheit 80, und
i. Kategorisieren der Information oder/und des Kennzeichenschilds 1' mittels der Kategorisierungseinheit 82 als
   A. "nicht manipuliert", wenn zumindest ein voreingestellter Mindestübereinstimmungsgrad erreicht wird, oder
   B. "manipuliert", wenn ein voreingestellter Mindestübereinstimmungsgrad nicht erreicht wird.

Das Ergebnis der Kategorisierung wird einem Benutzer auf der Anzeige 84 des Mobiltelefons dargestellt.

In der hier beschriebenen beispielhaften Ausgestaltung des erfindungsgemäßen Verfahrens wird der Referenzidentifier bei der Produktregistrierung zusammen mit der Information in der Datenstruktur 50 abgelegt. Im nachgelagerten Validierungsschritt wird der Referenzidentifier anhand der Information aus der Datenstruktur 50 abgerufen. Diese Verfahrensweise erlaubt es, ressourcensparend gezielt einen in der Datenstruktur 50 abgelegten Identifier abzurufen, der dem zu validierenden Gegenstand 1 zugeordnet ist. Auf diese Weise muss das Verfahren zur Bestimmung des Übereinstimmungsgrads zwischen dem Prüfidentifier und dem aus der Datenstruktur 50 abgerufenen Referenzidentifier nur ein einziges Mal ausgeführt werden.

Vor dem ortsaufgelösten Analysieren der Prüfaufnahme in den dunklen Bereichen 11' des Datamatrix-Codes 10' wird sowohl eine Lagekorrektur als auch eine Grö-βenkorrektur der zu analysierenden Aufnahme durchgeführt, um eine Bildregistrierung zwischen Referenzaufnahme und Prüfaufnahme zu erzielen.

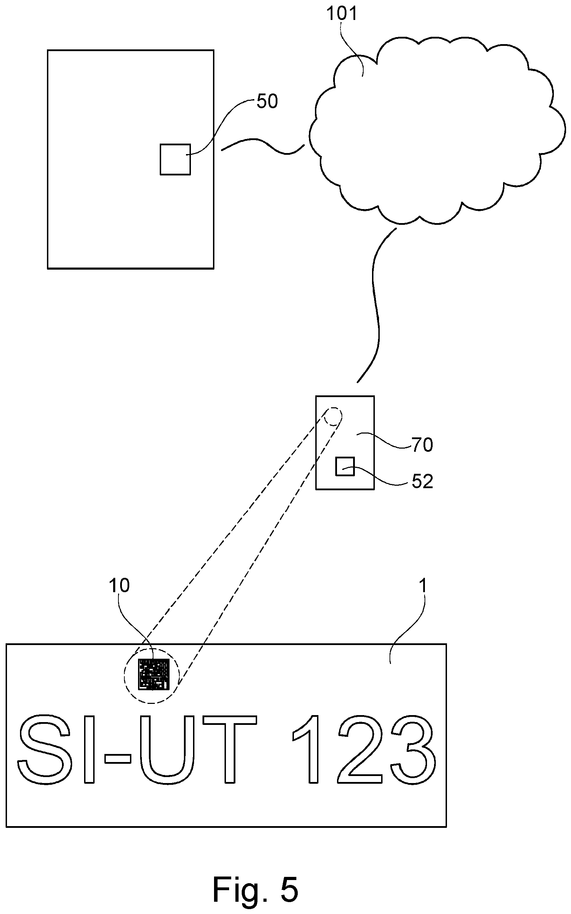

In den Figuren 1 und 5 ist ein zweites Ausführungsbeispiel eines erfindungsgemäßen Systems 1 dargestellt. Sein Aufbau entspricht in weiten Teilen demjenigen des Systems gemäß des ersten Ausführungsbeispiels. Übereinstimmende Merkmale sind mit übereinstimmenden Bezugszeichen bezeichnet.

Insbesondere ist die erste Funktionseinheit 40 des Systems gemäß des zweiten Ausführungsbeispiels mit der ersten Funktionseinheit 40 des Systems gemäß des ersten Ausführungsbeispiels identisch.

Die zweite Funktionseinheit 70 des Systems gemäß des zweiten Ausführungsbeispiels unterscheidet sich bei ansonsten identischem Aufbau hingegen von der zweiten Funktionseinheit 70 des Systems gemäß des ersten Ausführungsbeispiels dahingehend, dass die zweite Funktionseinheit 70 für eine ordnungsgemäße Funktion keinen permanenten Zugriff auf die über das Internet 101 zugängliche Datenstruktur 50 erfordert.

Hierzu ist auf der zweiten Funktionseinheit 70 eine Datenstruktur 52 angeordnet, die eine vollständige Kopie der Datenstruktur 50 darstellt. Bei der Produktvalidierung wird nicht auf die Datenstruktur 50 zugegriffen, sondern auf die lokal vorgehaltene Datenstruktur 52.

Steht der zweiten Funktionseinheit 70 ein Internetzugang zur Verfügung, so wird automatisch in geeigneten Abständen ein Abgleich der lokal vorgehaltenen Datenstruktur 52 mit der "globalen" Datenstruktur 52 durchgeführt.

Das in den Ausführungsbeispielen offenbarte erfindungsgemäße System sowie das hierin offenbarte erfindungsgemäße Verfahren sind im Rahmen der Erfindung nicht auf die hierin jeweils offenbarten Ausführungsformen sondern allein durch die Ansprüche beschränkt.

### Bezugszeichen

- 1, 1': Kfz-Kennzeichenschild
- 10, 10': Datamatrix-Code
- 11: heller/dunkler Bereich
- 40: erste Funktionseinheit
- 42: erste Kamera
- 44: erste Analyseeinheit
- 50: (globale) Datenstruktur
- 52: (lokale) Datenstruktur
- 70: zweite Funktionseinheit
- 72: zweite Kamera
- 74: zweite Analyseeinheit
- 76: Decodiereinheit
- 78: Mittel zum Abrufen eines Identifiers
- 80: Vergleichseinheit
- 82: Kategorisierungseinheit
- 84: Anzeige
- 86: Lagekorrekturmittel
- 88: Größenkorrekturmittel
- 100: System
- 101: Internet

## Patentansprüche

1. Verfahren zur Feststellung einer Manipulation oder Fälschung eines Gegenstands (1), mit Hilfe eines Systems nach Anspruch 9, wobei der Gegenstand mit einer graphischen Repräsentation einer Information gekennzeichnet ist, wobei die graphische Repräsentation der Information helle und dunkle Bereiche (11) ausbildet und der Gegenstand (1) eine Oberfläche mit einer kontrastgebenden, irregulären Mikrostruktur aufweist, mit folgenden Verfahrensschritten:
a. Erstellen einer ersten Aufnahme des Oberflächenbereichs eines zu registrierenden Gegenstands (1), in dem die graphische Repräsentation der Information angeordnet ist,
b. Bereitstellen eines aus der ersten Aufnahme generierten Referenzidentifiers in einer Datenstruktur (50),
c. Erstellen einer zweiten Aufnahme des Oberflächenbereichs eines zu validierenden Gegenstands (1'), in dem die graphische Repräsentation einer Information angeordnet ist, wobei sowohl der Gegenstand (1') als auch die Information mit dem in den Schritten a. und b. registrierten Gegenstand (1) bzw. der auf diesem angeordneten Information zumindest vom ersten Anschein her identisch ist,
d. Abrufen eines Referenzidentifiers aus der Datenstruktur (50), und
e. Ausführen eines Verfahrens zur Bestimmung des Übereinstimmungsgrads zwischen einem aus der zweiten Aufnahme generierten Prüfidentifier und dem aus der Datenstruktur abgerufenen Referenzidentifier, wobei zur Generierung des Referenzidentifiers und des Prüfidentifiers folgende Verfahrensschritte durchgeführt werden:
f. Ortsaufgelöstes Analysieren der ersten Aufnahme in den hellen oder/und in den dunklen Bereichen (11) und Generieren eines Referenzidentifiers,
g. Ortsaufgelöstes Analysieren der zweiten Aufnahme des Oberflächenbereichs in den hellen oder/und in den dunklen Bereichen (11') und Generieren eines Prüfidentifiers
wobei das Verfahren **dadurch gekennzeichnet ist, dass** die Oberfläche des Gegenstands mit einer Glasbead-basierten retroreflektierenden Folie belegt ist, welche die irreguläre Mikrostruktur bildet, wobei die graphische Repräsentation der Information so an dem Gegenstand angeordnet ist, dass die irreguläre Mikrostruktur mit der graphischen Repräsentation der Information verschränkt ist.

2. Verfahren gemäß Anspruch 1, durch den folgenden weiteren Verfahrensschritt gekennzeichnet:
h. Kategorisieren des zu validierenden Gegenstands (1') als
i. "nicht manipuliert", wenn zumindest ein voreingestellter Mindestübereinstimmungsgrad erreicht wird, oder
ii. "manipuliert", wenn ein voreingestellter Mindestübereinstimmungsgrad nicht erreicht wird.

3. Verfahren gemäß Anspruch 1, **dadurch gekennzeichnet, dass** in einem vorgelagerten Verfahrensschritt der Gegenstand (1) mit einer graphischen Repräsentation der Information gekennzeichnet wird, wobei die graphische Repräsentation der Information helle und dunkle Bereiche (11) ausbildet.

4. Verfahren gemäß Anspruch 1, **dadurch gekennzeichnet, dass**
a. der Referenzidentifier zusammen mit der Information in der Datenstruktur (50) abgelegt wird, und dass
b. der Referenzidentifier in Schritt i. anhand der Information aus der Datenstruktur (50) abgerufen wird.

5. Verfahren gemäß Anspruch 1, durch folgenden weiteren Verfahrensschritt gekennzeichnet:
a. Extrahieren der in der graphischen Repräsentation der Information codierten Information, und
b. Bereitstellen der extrahierten Information für eine Weiterverarbeitung.

6. Verfahren gemäß Anspruch 1, **dadurch gekennzeichnet, dass** es sich bei dem Gegenstand (1) um ein Ausweisdokument, ein Zahlungsmittel oder um ein Kfz-Kennzeichenschild handelt.

7. Verfahren gemäß Anspruch 1, **dadurch gekennzeichnet, dass** beim ortsaufgelösten Analysieren der ersten bzw. zweiten Aufnahme in den hellen oder/und in den dunklen Bereichen (11, 11') eine Lagekorrektur oder/und eine Größenkorrektur der zu analysierenden Aufnahme durchgeführt wird.

8. Verfahren gemäß Anspruch 1, **dadurch gekennzeichnet, dass** beim ortsaufgelösten Analysieren der ersten bzw. zweiten Aufnahme in den hellen oder/und in den dunklen Bereichen (11, 11') die analysierten hellen oder/und dunklen Bereiche in eine vorgegebene Anzahl von Teilabschnitten (11.1 - 11.4, 11.1' - 11.4') zerlegt werden.

9. System (100) zur Überprüfung einer fälschungssicheren Kennzeichnung eines Gegenstands (1, 1') mit einer Information, wobei der Gegenstand (1, 1') mit einer graphische Repräsentation der Information, insbesondere in Form eines Barcodes, eines QR-Codes oder eines Datamatrix-Codes (10, 10') gekennzeichnet ist unter Ausbildung heller und dunkler Bereiche (11, 11'), und wobei der Gegenstand (1, 1') eine Oberfläche mit einer kontrastgebenden, irregulären Mikrostruktur aufweist, wobei das System (100) folgende Komponenten aufweist:
a. eine Kamera (42, 72), die dazu geeignet ist, eine Aufnahme des Oberflächenbereichs des Gegenstands (1, 1'), in dem die graphische Repräsentation der Information angeordnet ist, zu erstellen, wobei das Auflösungsvermögen der Kamera (42, 72) zur Auflösung der irregulären Mikrostruktur ausreicht,
b. eine Datenstruktur (50, 52), in dem zumindest ein Identifier bereitgestellt werden kann,
c. eine Decodiereinheit (76), die dazu eingerichtet ist, aus einer von der Kamera (42, 72) erstellten Aufnahmen des Oberflächenbereichs des Gegenstands (1, 1'), in dem die graphische Repräsentation der Information angeordnet ist, die Information zu extrahieren und für eine Weiterverarbeitung zur Verfügung zu stellen,
d. eine Vergleichseinheit (80), die dazu eingerichtet ist, ein Verfahren zur Bestimmung des Übereinstimmungsgrads zwischen zwei aus verschiedenen Aufnahmen des Oberflächenbereichs des Gegenstands (1, 1'), in dem die graphische Repräsentation der Information angeordnet ist, generierten Identifiern auszuführen,
e. eine Analyseeinheit (44, 74), die dazu eingerichtet ist, von der Kamera erstellte Aufnahmen des Oberflächenbereichs des Gegenstands (1, 1'), in dem die graphische Repräsentation der Information angeordnet ist, in den hellen und/oder in den dunklen Bereichen (11, 11') ortsaufgelöst zu analysieren, un einen Identifier zu generieren,
**dadurch gekennzeichnet, dass**
die Oberfläche des Gegenstands (1, 1') mit einer Glasbead-basierten retroreflektierenden Folie belegt ist, welche die irreguläre Mikrostruktur bildet, wobei die graphische Repräsentation der Information so an dem Gegenstand angeordnet ist, dass die irreguläre Mikrostruktur mit der graphischen Repräsentation der Information verschränkt ist.

10. System (100) nach Anspruch 9, **dadurch gekennzeichnet, dass** es weiterhin eine Kategorisierungseinheit (82) umfasst, die dazu eingerichtet ist, die extrahierte Information anhand des Ergebnisses des von der Vergleichseinheit (80) ausgeführten Verfahrens wie folgt zu kategorisieren:
i. "nicht manipuliert", wenn ein voreingestellter Mindestübereinstimmungsgrad erreicht wird, oder als
ii. "manipuliert", wenn ein voreingestellter Mindestübereinstimmungsgrad nicht erreicht wird.

11. System (100) gemäß Anspruch 9, **dadurch gekennzeichnet, dass** das System (100) weiterhin Mittel zum Abrufen eines Identifiers aus der Datenstruktur (50, 52) aufweist.

12. System (100) gemäß Anspruch 9, **dadurch gekennzeichnet, dass** die Datenstruktur (50, 52) dazu eingerichtet ist, dass ein Identifier zusammen mit der Information in der Datenstruktur (50, 52) abgelegt werden kann.

13. System (100) gemäß Anspruch 9, **dadurch gekennzeichnet, dass** es sich bei dem Gegenstand (1) um ein Ausweisdokument, ein Zahlungsmittel oder um ein Kfz-Kennzeichenschild handelt.

14. System (100) gemäß Anspruch 9, **dadurch gekennzeichnet, dass** das System
a. Lagekorrekturmittel (86) aufweist, die dazu eingerichtet sind, beim ortsaufgelösten Analysieren einer Aufnahme des Oberflächenbereichs des Gegenstands (1, 1'), in dem die graphische Repräsentation der Information angeordnet ist, eine Lagekorrektur der zu analysierenden Aufnahme durchzuführen, oder/und
b. Größenkorrekturmittel (88) aufweist, die dazu eingerichtet sind, beim ortsaufgelösten Analysieren einer Aufnahme des Oberflächenbereichs des Gegenstands (1, 1'), in dem die graphische Repräsentation der Information angeordnet ist, eine Größenkorrektur der zu analysierenden Aufnahme durchzuführen.

15. System (100) gemäß Anspruch 9, **dadurch gekennzeichnet, dass** die Analyseeinheit (44, 74) dazu eingerichtet ist, beim ortsaufgelösten Analysieren einer von der Kamera (42, 72) erstellten Aufnahme des Oberflächenbereichs des Gegenstands (1, 1'), in dem die graphische Repräsentation der Information angeordnet ist, die analysierten hellen oder/und dunklen Bereiche (11, 11') in eine vorgegebene Anzahl von Teilabschnitten (11.1 - 11.4, 11.1' - 11.4') zu zerlegen.

## Claims

1. A method for determining a manipulation or falsification of an object (1) with the aid of a system according to claim 9, wherein the object is marked with a graphic representation of an information, wherein the graphic representation of the information forms light and dark areas (11) and the object (1) comprises a surface with a contrasting irregular microstructure, with the following method steps:
a. creating a first recording of the surface area of an object (1) to be registered, in which the graphic representation of the information is arranged,
b. providing a reference identifier generated from the first recording in a data structure (50),
c. creating a second recording of the surface area of an object (1') to be validated, in which the graphic representation of an information is arranged, wherein both the object (1') and the information, at least at first sight, are identical to the object (1) registered in steps a. and b. / to the information arranged thereon.
d. retrieving a reference identifier from the data structure (50), and
e. executing a method for determining the degree of matching between a test identifier generated from the second recording and the reference identifier retrieved from the data structure, wherein for generating the reference identifier and the test identifier the following method steps are performed:
f. analysing, in a locally resolved manner, the first recording in the light or/and dark areas (11) and generating a reference identifier,
g. analysing, in a locally resolve manner, the second recording of the surface area in the light or/and dark areas (11') and generating a test identifier,
wherein the method is **characterised in that** the surface of the object is covered with a glass-bead-based retro-reflecting foil, which forms the irregular microstructure, wherein the graphic representation of the information is arranged on the object in such a way that irregular microstructure is interlocked with the graphic representation.

2. The method according to claim 1, **characterised by** the following further method step:
h. categorising the object (1') to be validated as
i. "not manipulated" if at least one pre-set minimum degree of matching is reached, or
ii. "manipulated" if a pre-set minimum degree of matching is not reached.

3. The method according to claim 1, **characterised in that** in an upstream method step the object (1) is marked with a graphic representation of the information, wherein the graphic representation of the information forms the light and dark areas (11).

4. The method according to claim 1, **characterised in that**
a. the reference identifier together with the information is stored in the data structure (50), and **in that**
b. the reference identifier is retrieved in step i by way of the information from the data structure (50) .

5. The method according to claim 1, **characterised by** the following further method step:
a. Extracting the information coded in the graphic representation of the information, and
b. Providing the extracted information for further processing.

6. The method according to claim 1, **characterised in that** the object (1) is an identity document, a means of payment or a vehicle licence plate.

7. The method according to claim 1, **characterised in that** during analysing, in a locally resolved manner, of the first / second recording in the light or/and dark areas (11, 11') a position correction or/and size correction of the recording to be analysed is performed.

8. The method according to claim 1, **characterised in that** during analysing, in a locally resolved manner, of the first / second recording in the light or/and dark areas (11, 11') the analysed light or/and dark areas are divided into a pre-set number of partial sections (11.1 - 11.4, 11.1' - 11.4').

9. A system (100) for checking a forgery-proof marking of an object (1, 1') with an information, wherein the object (1, 1') is marked with a graphic representation of the information, in particular in form of a barcode, a QR-code or a data matrix code (10, 10') while forming light and dark areas (11, 11'), and wherein the object (1, 1') comprises a surface with a contrasting, irregular microstructure, wherein the system (100) comprises the following components:
a. a camera (42, 72) which is suitable for creating a recording of the surface area of the object (1, 1'), in which the graphic representation of the information is arranged, wherein the resolution capacity of the camera (42, 72) is sufficient for resolving the irregular microstructure,
b. a data structure (50, 52), in which at least one identifier can be provided,
c. a decoding unit (76), which is arranged to extract the information from a recording created by the camera (42, 72) of the surface area of the object (1, 1'), in which the graphic representation of the information is arranged, and to provide it for further processing,
d. a comparison unit (80), which is arranged to execute a method for determining the degree of matching between two identifiers generated from two different recordings of the surface area of the object (1, 1'), in which the graphic representation of the information is arranged,
e. an analysing unit (44, 74), which is arranged to analyse, in a locally resolved manner, recordings created by the camera of the surface area of the object (1, 1'), in which the graphic representation of the information, in the light or/and dark areas (11, 11'), in order to generate an identifier, **characterised in that** the surface of the object (1, 1') is covered with a glass-bead-based retro-reflecting foil, which forms the irregular microstructure, wherein the graphic representation of the information is arranged on the object in such a way that the irregular microstructure is interlocked with the graphic information of the information.

10. The system (100) according to claim 9, **characterised in that** it further comprises a categorising unit (82), which is arranged to categorise the extracted information by way of the result of the method executed by the comparison unit (80), as follows:
i: "not manipulated" if a pre-set minimum degree of matching is reached, or
ii: "manipulated" if a pre-set minimum degree of matching is not reached.

11. The system (100) according to claim 9, **characterised in that** the system (100) further comprises means for retrieving an identifier from the data structure (50, 52) .

12. The system (100) according to claim 9, **characterised in that** the data structure (50, 52) is arranged to allow an identifier to be stored together with the information in the data structure (50, 52).

13. The system (100) according to claim 9, **characterised in that** the object (1) is an identity document, a means of payment or a vehicle licence plate.

14. The system (100) according to claim 9, **characterised in that** the system comprises
a. position correction means (86), which are arranged, during analysing, in a locally resolved manner, of a recording of the surface area of the object (1, 1'), in which the graphic representation of the information is arranged, to perform a position correction of the recording to be analysed, or/and
b. size correction means (88), which are arranged, during analysing, in a locally resolved manner, of a recording of the surface area of the object (1, 1'), in which the graphic representation of the information is arranged, to perform a size correction of the recording to be analysed.

15. The system (100) according to claim 9, **characterised in that** the analysis unit (44, 74) is arranged - during analysing, in a locally resolved manner, of a recording created by the camera (42, 72) of the surface area of the object (1, 1'), in which the graphic representation of the information is arranged - to divide the analysed light or/and dark areas (11, 11')into a pre-set number of partial sections (11.1 - 11.4, 11.1' - 11.4').

## Revendications

1. Procédure de détection de la manipulation ou de la contrefaçon d'un objet (1), à l'aide d'un système selon la revendication 9, dans lequel l'objet est marqué avec une représentation graphique d'une information, dans lequel la représentation graphique de l'information forme des zones claires et sombres (11) et l'objet (1) présente une surface présentant une microstructure irrégulière et contrastée, comportant les étapes de processus consistant à :
a. créer un premier enregistrement de la surface d'un objet (1) à enregistrer, dans lequel la représentation graphique des informations est placée,
b. fournir un identifiant de référence généré à partir du premier enregistrement dans une structure de données (50),
c. créer un deuxième enregistrement de la surface d'un objet (1') à valider, dans lequel la représentation graphique de l'information est placée, dans lequel tant l'objet (1') que l'information sont au moins apparemment identiques à l'objet enregistré (1) aux étapes a. et b. ou les informations qui y sont placées,
d. récupérer un identifiant de référence à partir de la structure de données (50), et
e. exécuter une procédure pour déterminer le degré de concordance entre un identifiant de test généré à partir du deuxième enregistrement et l'identifiant de référence extrait de la structure de données, dans lequel pour générer l'identifiant de référence et l'identifiant de test les étapes de procédés suivantes sont exécutées :
f. analyse spatialement résolue du premier enregistrement dans les zones claires et/ou sombres (11) et génération d'un identifiant de référence,
g. analyse spatialement résolue de la deuxième image de la surface dans les zones claires et/ou sombres (11') et génération d'un identifiant de test,
dans lequel le procédé est **caractérisé en ce que** la surface de l'objet est recouverte d'un film rétroréfléchissant à base de billes de verre qui forme la microstructure irrégulière, dans lequel la représentation graphique de l'information est disposée sur l'objet de telle sorte que la microstructure irrégulière soit délimitée par la représentation graphique de l'information.

2. Procédé selon la revendication 1, **caractérisé par** les étapes de procédé supplémentaires suivantes :
h. catégoriser l'élément à valider (1') comme
i. « non manipulé » si au moins un degré de concordance minimum prédéfini est atteint, ou
ii. « manipulé » si un degré de concordance minimum n'est pas atteint.

3. Procédé selon la revendication 1, **caractérisé en ce que** dans une étape précédente du procédé, l'objet (1) est marqué d'une représentation graphique de l'information, dans lequel la représentation graphique des informations forme des zones claires et sombres (11) .

4. Procédé selon la revendication 1, **caractérisé en ce que**
a. l'identifiant de référence est mémorisé avec les informations dans la structure de données (50), et **en ce que**
b. l'identifiant de référence à l'étape i. est récupéré sur la base des informations provenant de la structure de données (50).

5. Procédé selon la revendication 1, **caractérisé par** l'étape supplémentaire suivante :
a. extraire les informations codées dans la représentation graphique des informations, et
b. fournir les informations extraites en vue d'un traitement ultérieur.

6. Procédé selon la revendication 1, **caractérisé en ce que** l'objet (1) est un document d'identification, un moyen de paiement ou est une plaque d'immatriculation de véhicule.

7. Procédé selon la revendication 1, **caractérisé en ce que** lors de l'analyse du premier ou du deuxième enregistrement de manière spatialement résolue, une correction de position et/ou une correction de taille de l'enregistrement à analyser est effectuée dans les zones claires et/ou sombres (11, 11').

8. Procédé selon la revendication 1, **caractérisé en ce que** lors de l'analyse du premier ou du deuxième enregistrement de manière spatialement résolue dans les zones claires et/ou sombres (11, 11'), les zones claires et/ou sombres analysées sont divisées en un nombre prédéterminé de sections partielles (11.1-11.4, 11.1'-11.4').

9. Système (100) de contrôle d'une identification infalsifiable d'un objet (1, 1') avec information, dans lequel l'objet (1, 1') est marqué avec une représentation graphique d'une information, notamment sous la forme d'un code-barres, d'un code QR ou d'un code Data Matrix (10, 10') pour former des zones claires et sombres (11, 11'), et l'objet (1, 1) présente une surface avec une microstructure irrégulière, contrastée, dans lequel le système (100) comporte les composants suivants :
a. une caméra (42, 72) adaptée pour créer un enregistrement de la surface de l'objet (1, 1') dans laquelle la représentation graphique des informations est placée, dans lequel la résolution de la caméra (42, 72) est suffisante pour résoudre la microstructure irrégulière,
b. une structure de données (50, 52) dans laquelle au moins un identifiant peut être fourni,
c. une unité de décodage (76), qui est configurée pour extraire les informations d'un enregistrement créé par la caméra (42, 72) de la surface de l'objet (1, 1'), dans laquelle la représentation graphique des informations est placée, et pour la fournir en vue d'un traitement ultérieur,
d. une unité de comparaison (80) qui est configurée pour fournir un procédé permettant de déterminer le degré de concordance entre deux enregistrements différents de la surface de l'objet (1, 1'), dans laquelle la représentation graphique des informations est placée, pour exécuter les identifiants générés,
e. une unité d'analyse (44, 74) qui est configurée pour effectuer une analyse spatialement résolue des enregistrements créés par la caméra de la surface de l'objet (1, 1'), dans laquelle la représentation graphique des informations est placée, dans les zones claires et/ou sombres (11, 11') et générer un identifiant, **caractérisé en ce que** la surface de l'objet (1, 1') est recouverte d'un film rétroréfléchissant à base de billes de verre, qui forme le microstructure irrégulière, la représentation graphique de l'information étant disposée sur l'objet de telle manière que la microstructure irrégulière soit délimitée par la représentation graphique de l'information.

10. Système (100) selon la revendication 9, **caractérisé en ce qu'**il comprend en outre une unité de catégorisation (82) qui est configurée pour catégoriser les informations extraites en fonction du résultat du procédé effectué par l'unité de comparaison (80) comme suit :
i. « non manipulé » si au moins un degré de concordance minimum prédéfini est atteint, ou
ii. « manipulé » si un degré de concordance minimum n'est pas atteint.

11. Système (100) selon la revendication 9, **caractérisé en ce que** le système (100) comprend en outre des moyens pour récupérer un identifiant à partir de la structure de données (50, 52).

12. Système (100) selon la revendication 9, **caractérisé en ce que** la structure de données (50, 52) est établie de telle sorte qu'un identifiant puisse être mémorisé avec les informations dans la structure de données (50, 52).

13. Système (100) selon la revendication 9, **caractérisé en ce que** l'objet (1) est un document d'identification, un moyen de paiement ou une plaque d'immatriculation d'un véhicule.

14. Système (100) selon la revendication 9, **caractérisé en ce que** le système présente :
a. des moyens de correction de position (86) conçus pour, lors de l'analyse spatialement résolue d'un enregistrement de la surface de l'objet (1, 1'), dans laquelle la représentation graphique des informations est placée, effectuer une correction de position de l'enregistrement à analyser, et/ou
b. des moyens de correction de taille (88), qui sont conçus pour lors de l'analyse spatialement résolue d'un enregistrement de la surface de l'objet (1, 1'), dans laquelle la représentation graphique des informations est placée, effectuer une correction de taille de l'enregistrement à analyser.

15. Système (100) selon la revendication 9, **caractérisé en ce que** l'unité d'analyse (44, 74) est configurée, lors de l'analyse spatialement résolue d'un enregistrement créé par la caméra (42, 72) de la surface de l'objet (1, 1'), dans laquelle la représentation graphique des informations est placée, pour diviser les zones claires et/ou sombres analysées (11, 11') en un nombre prédéterminé de sections partielles (11.1-11.4, 11.1'-11.4').
